# EUROPEAN PATENT SPECIFICATION

(11) **EP 0 776 155 B1**
(45) Date of publication and mention of the grant of the patent: **02.02.2000**
(21) Application number: 95930822.2
(22) Date of filing: 14.08.1995
(51) Int. Cl.: A01G 7/06, A01M 21/04, A01N 25/00

(54) **DELIVERY OF EXOGENOUS CHEMICAL SUBSTANCES TO PLANT TISSUES**
ZUFÜHRUNG EXOGENER CHEMISCHER SUBSTANZEN AN PFLANZENGEWEBE
APPORT DE SUBSTANCES CHIMIQUES EXOGENES AUX TISSUS DE PLANTES

(30) Priority: 19.08.1994 US 293528; 07.06.1995 US 486923
(43) Date of publication of application: 04.06.1997
(73) Proprietor: MONSANTO COMPANY, St. Louis, Missouri 63167 (US)
(72) Inventor: BODULOVIC, Zeljko, Sarrer, ACT 2607 (AU); FENG, Paul Chi Chia, Ellisville, MO 63011 (US); JOLLY, Kay Denise, Defiance, MO 63341 (US); KANIEWSKI, Wojciech Kazimierz, Chesterfield, MO 63017 (US); SAMMONS, Robert Douglas, New Melle, Mo. 63365 (US); SANDBRINK, Joseph Jude, Des Peres, MO 63131 (US); SCHULTZ, Gary Eugene, Ballwin, MO 63011 (US); STEHLING, Sammy John, Monmouth, IL 61462 (US)
(74) Representative: Bosch, Henry
(86) International application number: US9510340
(87) International publication number: WO9605721

(56) References cited:
- FR-A- 433 496
- FR-A- 2 539 955
- GB-A- 2 120 513
- US-A- 3 799 758
- US-A- 4 047 326
- US-A- 4 945 050
- US-A- 5 179 022
- WEED SCIENCE, vol.40, 1992 pages 171 - 173 WELLS ET AL. 'Lactofen increases glyphosate-stimulated shikimate production in little mallow (Malva parviflora)' cited in the application
- WEED SCIENCE, vol.31, 1983 pages 445 - 449 FRANK ET AL. 'Effects of metribuzin placement on the foliage of tomato (Lycopersicum esculentum) and jimsonweed (Datura stramonium)' cited in the application
- PESTICIDE SCIENCE, vol.3, 1972 pages 323 - 331 TURNER 'The influence of additives on the penetration of foliar applied growth regulator herbicides' cited in the application
- DATABASE WPI Week 9222, Derwent Publications Ltd., London, GB; AN 92-181249 [22] & SU,A,1 499 738 (UKR. AGRIC. MICROBIOLOG. RES. INST.) 7 September 1991
- PATENT ABSTRACTS OF JAPAN vol. 17, no. 102 (C-1031) 2 March 1993 & JP,A,04 290 807 (YASHIMA CHEM. IND. CO. LTD.) 15 October 1992 cited in the application
- WEED SCIENCE, vol.22, 1974 pages 460 - 463 FORTINO ET AL. 'Response of tomato to metribuzin' cited in the application
- ABSTRACTS OF THE WEED SCIENCE SOCIETY OF AMERICA, no.231, 1983 page 96 MOTOOKA ET AL. 'Cut-surface application of glyphosate to control tropical brush species' cited in the application

## Description

### FIELD OF THE INVENTION

The present invention relates to an improved method for delivering an effective amount of exogenous chemical substance or substances to a plant or plants via non-woody living tissues thereof. Also part of the invention are novel compositions which are particularly adapted for use by the method of the invention, apparatus for delivering exogenous chemical substances by the method of the invention, and leaf prepared by the invention. The method is characterized in that it involves the use of a propelled material to cause local physical injury to non-woody living tissues before, simultaneously with or after application of the exogenous chemical substance. Benefits of the enhanced delivery achieved by practice of the present invention include, but are not restricted to, lower use rates, better rainfastness and more rapid manifestation of the effect of the exogenous chemical substance.

### BACKGROUND OF THE INVENTION

For many purposes in agriculture and related endeavors it is desired to deliver exogenous chemical substances of various kinds into the living cells and tissues of a plant or plants. An exogenous chemical substance as defined herein is any monomeric or oligomeric chemical substance having desired biological activity, whether naturally or synthetically derived, which is applied to a plant with the intent or result of said substance entering living cells or tissues of the plant. Examples of exogenous chemical substances include, but are not limited to, chemical pesticides (such as herbicides, fungicides, bactericides, viricides, insecticides, miticides, nematicides, molluscicides and the like), plant growth regulators, fertilizers and nutrients, gametocides, defoliants, desiccants, mixtures thereof and the like.

Most conveniently such an exogenous chemical substance has been delivered to the plant by application to leaves or other non-woody above-ground plant parts. However, it is known (see for example M. Devine, S. O. Duke and C. Fedtke in "Physiology of Herbicide Action" (1993), Chapter 2, p. 17, Prentice Hall) that such application is usually inefficient, only a portion of the applied substance actually reaching the living cells and tissues where it can exert its desired action. This appears to be the case even when adjuvants such as surfactants are added to the composition being applied (see C. G. McWhorter in "Herbicide Physiology" Vol. 2 (1985) ed. S. O. Duke, Chapter 6, p. 142, CRC Press). The present invention fills a need long desired in the art, by overcoming at least some of the inefficiency inherent in applying an exogenous chemical substance to above-ground plant surfaces.

Improved efficiency of delivery to plants of exogenous chemical substances, particularly agriculturally useful substances such as pesticides, plant growth regulators and gametocides, has remained a major desideratum to the extent that it can allow substantial reduction of use rates without loss of the desired performance. Pressures felt by the agricultural industry to reduce pesticide, particularly herbicide, usage are well evidenced by symposia on the subject, such as that held in 1993 by the Weed Science Society of America and documented in Weed Technology Vol. 8 (1994), pp. 331-386. Reduced use rates bring rewards not only environmentally but also economically, as the cost per unit area treated decreases. Another benefit of enhanced efficiency of delivery may be an improved tendency of an applied chemical substance to retain its efficacy on a treated plant when natural or artificial rain or overhead irrigation occurs within a short period, such as a few minutes to a few hours, after application. Such a tendency is referred to herein as "rainfastness". Yet another benefit of enhanced efficiency of delivery may be earlier manifestation of outward signs or symptoms that the applied substance is exerting its desired effect in or on a treated plant, on parasites or pathogens of the plant, or on organisms, particularly invertebrate animals such as insects, feeding on non-woody or woody parts of the plant.

Topical application of exogenous chemical substances to cuts or wounds in woody stems is widely practiced as a means of introducing such substances to trees, brush or other woody vegetation. For example, P. Motooka, G. Nagai and L. Ching in Abstracts of the Weed Science Society of America (1983), p. 96 reported the "hack and squirt" method of applying herbicides to cut surfaces in the trunks of tropical brush species. Systems such as that commercialized in Canada under the trademark "EZJect" have also been developed for direct injection of chemicals into tree trunks. H. S. Mayeux Jr and R. A. Crane in Weed Science Vol. 32 (1984), pp. 845-849 reported control of the woody shrubs common goldenweed and false broomweed with herbicides applied by means of a carpeted roller device bearing a scraper, designed to abrade woody stems prior to herbicide deposition. Removal of the scraper reduced effectiveness of picloram but not of glyphosate or triclopyr.

V. S. Bhatnagar and R. A. Agarwal in University of Udaipur Research Journal Vol. 9 (1971), p. 93 reported experiments in which they applied the insecticides monocrotophos, dicrotophos and carbofuran to stems of cotton. They found that translocation of insecticide from treated stems was increased when stems were abraded just prior to treatment.

Japanese Patent Application No. 4-290807 published in 1992 discloses a method of controlling the woody climbing weed kudzu by wounding the stems followed by treatment of cut stems with the trimethylsulfonium or isopropylamine salt of glyphosate, or with bialaphos or the ammonium salt of glufosinate. By contrast with this and other art cited above, the present invention provides enhanced delivery of exogenous chemical substances to non-woody or herbaceous tissue.

Tall weeds are frequently cut or mown prior to application of a herbicide, resulting in some of the herbicide inevitably being applied directly to cuts or other wounds on leaves or herbaceous stems. J. T. Kirkby and S. Glenn in Proceedings of the Northeastern Weed Science Society (1983), p. 17 reportedly found that glyphosate herbicide, applied with a wick-bar to johnsongrass, was more effective on uncut plants than on plants cut before application. However, in a greenhouse study they reported glyphosate to be more effective when applied directly to a wound than when applied to unwounded tissue. The present invention seeks to eliminate the problem mentioned by Kirkby and Glenn, namely that cut plants present a reduced foliar area for uptake of an exogenous chemical substance, while still exploiting wounds or other local physical injuries as sites for enhanced delivery. Physical injury as practiced herein is of a type that does not result in removal of substantial biomass from a treated plant.

UK Patent Application No. 2,120,513 published in 1983 discloses a method and apparatus for chemically treating weeds or undesirable plants involving scraping or bruising the weed or plant and applying a chemical substance to the scraped or bruised plant. No data are provided demonstrating enhanced delivery or efficacy, nor is the nature of the physical injury to living tissues caused by the scraping or bruising action characterized. The present invention provides a method, apparatus and composition for delivering an exogenous chemical substance to plants wherein physical injury to non-woody tissues thereof is localized rather than generalized, and wherein there is no requirement for a scraping or bruising device to be dragged over the plants, making constant contact with the plants.

In an experiment to simulate feeding injury by thrips on soybean, R. M. Huckaba and H. D. Coble in Journal of Economic Entomology Vol. 84 (1991), pp. 300-305 reported scratching the upper surfaces of soybean leaves with an insect pin so that the scratches penetrated both cuticle and epidermis. They then applied the herbicide acifluorfen at varying intervals after scratching. In one study, a significant increase in acifluorfen uptake was reported in scratched versus unscratched leaves. In a second study, the effect of scratching was not significant except when acifluorfen application was delayed for 96 hours after scratching. No teaching is provided by Huckaba and Coble as to how herbicide uptake can be enhanced on a reliable, consistent and practical basis by physical injury to living cells and tissues of non-woody plant parts.

Researchers have long used various mechanical treatments of the plant cuticle in efforts to reduce the barrier presented specifically by the cuticle to exogenously applied chemical substances. For example, J. Fortino Jr and W. E. Splittstoesser in Weed Science Vol. 22 (1974), pp. 460-463 reported rubbing the leaves of tomato with glass wool to damage the cuticle and trichomes (epidermal hairs). They reported a very minor but statistically significant increase in the toxicity of applied metribuzin herbicide in response to the treatment.

Later, J. R. Frank and C. E. Beste in Weed Science Vol. 31 (1983), pp. 445-449 reported abrading leaves of tomato and jimsonweed with a 5% volume/volume suspension of carborundum, using a camel-hair brush, prior to application of metribuzin containing compositions. In tomato, but not in jimsonweed, leaves thus abraded suffered greater necrosis than non-abraded leaves when drops of such compositions were placed on them. No description of the degree of injury caused by the abrasion treatment itself is provided, but the authors speculate that the enhanced metribuzin phytotoxicity in abraded leaves "could have been due to the elimination of penetration barriers". Abrasion did not affect the degree of metribuzin phytotoxicity when the herbicide was applied as an atomized spray rather than as 10 µl drops. They concluded that "the lack of enhanced metribuzin activity with sprays compared to drops on abraded leaves of tomato could be due to the greater concentration of metribuzin on a small leaf area following drop application than in atomized sprays and [this] may be more important than a penetration barrier".

More recently, B. H. Wells and A. P. Appleby in Weed Science Vol. 40 (1992), pp. 171-173 reported brushing a 1:1 volume/volume carborundum slurry across the adaxial surfaces of little mallow leaves using a fine bristle brush prior to application of glyphosate herbicide, either alone or together with lactofen herbicide. No effect of abrasion was reported to have been seen at three levels of glyphosate-induced shikimate concentration in treated plants. A scanning electron microscope was used to verify that the abrasion treatments had disrupted the cuticle; however, no indication is given by the authors of subcuticular tissue injury caused by the abrasion.

G. L. Orr, R. N. Bowman and P. Kugrens in Pesticide Biochemistry and Physiology Vol. 21 (1984), pp. 213-222 reportedly found that tolerance of cucumber cotyledons to injury by the methyl ester of acifluorfen could be eliminated by abrading the adaxial surface of the cotyledons with carborundum. Scanning electron micrographs showed that rubbing with carborundum caused tears and pits in the cotyledon surface. However, it had no effect on efflux of previously applied 3-*O*-methyl-[¹⁴C]glucose from cotyledons treated with the herbicide, suggesting that injury to living tissues due to the abrasion was minimal.

G. Strobel et al. in ACS Symposium Series No. 439 (1990), pp. 53-62 reported isolation of the diketopiperazine phytotoxin maculosin from a strain of the pathogenic fungus Alternaria alternata occurring on spotted knapweed. They reported no uptake of maculosin applied either to unwounded or to wounded leaves of spotted knapweed.

G. E. Brown in Plant Disease Vol. 68 (1984), pp. 415-418 reportedly found that the fungicides benomyl, carbendazim, thiabendazole and imazalil, whether applied in water or in resin solution water wax, all equally penetrated the rind of orange fruits which had been injured abrasively with sandpaper.

Cuticle abrasion is commonly used in laboratory studies of plant growth regulators to enhance uptake into epicotyls, hypocotyls, coleoptiles or internode segments in standard bioassays. For example, G. E. Scherer in Plant Growth Regulation Vol. 11 (1992), pp. 153-157 reported that peptides from wasp and bee venom stimulated growth of etiolated zucchini hypocotyls when applied to hypocotyls with abraded cuticles. By contrast, T. Hoson and Y. Masuda in Plant and Cell Physiology Vol. 32 (1991), pp. 777-782 reported no inhibition by xyloglucan nonasaccharide of indole-3-acetic acid induced elongation even when segments of pea internodes or Vigna angularis epicotyls were abraded.

The mildly abrasive treatments reported above have been used as a means of damaging the outer wax layer of plant cuticles in an effort to reduce or eliminate this layer as a barrier to uptake of exogenous chemical substances. Perusal of the references cited immediately above will illustrate the highly variable and seldom significant results of such treatments. None of these authors gives any indication that more dramatic enhancements in efficacy of applied chemical substances might be obtainable with deeper abrasion that injures or kills living cells and tissues below the cuticle.

Cuticle, composed primarily of cutin and waxes, is thought to act as an effective barrier to the penetration of many exogenously applied chemical substances. Many investigators have attempted to remove the outer wax layer of the cuticle completely to improve chemical uptake. For example, R. C. Kirkwood in "Aspects of Applied Biology 14: Studies of Pesticide Transfer and Performance" (1987), pp. 281-291 reported removal of cuticle waxes from bracken fronds by swabbing with chloroform-impregnated cotton wool. Kirkwood reported that this treatment significantly enhanced uptake of the herbicide asulam into the fronds. Similarly, E. A. Baker in the same publication, pp. 141-151 reportedly observed a greater than 3-fold increase in uptake of 1-naphthylacetic acid into isolated pear leaf cuticles when cuticular wax was removed. Earlier, M. P. Rolston and A. G. Robertson in Weed Research Vol. 16 (1976), pp. 82-86 reported that removing cuticular wax of gorse with chloroform led to increased absorption of the herbicide picloram. L. A. Wilson and R. F. Norris in Plant Physiology Vol. 51 Supplement (1973), p. 47 reportedly measured penetration of the herbicide 2,4-D through isolated cuticles of various species and found that dewaxing enhanced penetration by a factor ranging from 2.5 for ivy at 15°C to over 120 for oleander at 25°C. In a recent review of the topic, M. Devine et al. in Physiology of Herbicide Action" (1993), Chapter 3, p. 35, Prentice Hall, commented that "a survey of the experiments using partially or completely dewaxed cuticle membranes indicates that dewaxing does not have uniform effects on all species and herbicides". They further concluded that "there was no obvious correlation between the amount of wax removed and the resultant increase in penetration" of herbicide. As a consequence of these observations taken together, the importance of the cuticle as a barrier to exogenous chemical substances cannot be predicted. The present method provides a practical means of overcoming uptake barriers without total removal or dewaxing of cuticles and thereby provides efficacious delivery of exogenous chemical substances.

D. J. Turner in Pesticide Science Vol. 3 (1972), pp. 323-331 discussed the possibility that chemically induced injury to the cuticle and epidermis of leaves might enhance the activity of foliar applied herbicides. Turner reported that S,S,S-tributylphosphorotrithioate, a cotton defoliant also known as DEF, increased the effects of salts of picloram, 2,4,5-T and mecoprop on a range of woody species. However, other organophosphorus compounds which did not cause visible injury gave similar enhancement of picloram phytotoxicity on dwarf bean. Turner remarked that there was no obvious connection between the contact effects of additives and their interaction in mixtures with herbicides. Turner speculated that DEF might act by increasing movement of the herbicidal salts through the cuticle but that the other synergists in his study might act in an entirely different way. There is no anticipation in this Turner reference of enhancement of herbicidal efficacy by any chemical treatment that does physical injury to subepidermal living tissues.

D. W. Eveling and M. Z. Eisa in Weed Research Vol. 16 (1976), pp. 15-18 reported adding 1% weight/volume of a kaolin-containing material called Stockalite, which had previously been found to increase the permeability of cuticles, to solutions of various herbicides prior to application to a range of plant species. Significant increases in herbicidal phytotoxicity were reported on leaves of some species, but most species showed no significant response. D. J. Turner in Annals of Applied Biology Vol. 106 Supplement: Tests of Agrochemicals and Cultivars 6 (1985), pp. 104-105 reported kaolin to be highly antagonistic to glyphosate herbicide on wheat and barley plants. In neither the Eveling nor the Turner study was kaolin applied in a manner which would have caused cuticular or subcuticular abrasion of the plants.

Abrasive dusts have been used to control insects by direct application; damage to insect cuticles by such dusts can lead to excessive water loss by the treated insect. In studies reported by M. Llewellyn and J. Eivaz in Entomologia Experimentalis et Applicata Vol. 26 (1979), pp. 219-222, both broad bean plants and aphids feeding on those plants were simultaneously treated with a range of abrasive dusts. The authors suggest that treatment with a systemic insecticide could accompany dust application to aphid-infested plants. No evidence was provided of plant injury resulting from such dusts.

Prior to the present invention, no published literature has suggested or disclosed the use of propelled material to cause local physical injury, involving death or significant damage to individual cells, in non-woody tissue of a plant, as a means of enhancing delivery of an exogenous chemical substance. US Patent No. 4,945,050 discloses a method of transporting a substance into living cells and tissues by propelling particles carrying the substance at such a speed that the particles penetrate the surface of the cells and become incorporated into the interior of the cells. The Patent notes at col. 1 line 8 that the method and apparatus disclosed therein does not kill the cells and tissues. Furthermore, the method involves delivery of biological substances" such as proteins, nucleic acids and cell fragments (see for example col. 7 lines 8-13) as opposed to exogenous chemical substances, which as defined herein are monomeric or oligomeric and have relatively low molecular weight, for example not greater than about 8000, preferably 2000, more preferably 1000. US Patent No. 5,179,022 describes an apparatus for delivering substances "in a non-lethal manner" into living cells and tissues by the method more broadly disclosed in US Patent No. 4,945,050.

It has not previously been anticipated or envisioned that local physical injury to living tissues would be highly effective as a way of improving delivery of exogenous chemical substances into plants. From the literature cited above it is clear that prior attempts to overcome barriers to entry of exogenous chemical substances into living plant tissues have either (a) emphasized minimal physical injury to these tissues, for example by limiting damage to the non-living cuticle overlying the tissues, or by selecting propelled microparticle delivery systems that do not seriously damage the cells penetrated by such microparticles; or (b) involved gross wounding of plants such that substantial removal of biomass occurs. None of the prior art cited herein suggests inflicting local physical injury to non-woody tissues as a means of lowering effective use rates, improving rainfastness or providing earlier manifestation of symptoms of the desired effect of an exogenous chemical substance applied before, simultaneously with or after inflicting said injury.

PCT patent application PCT/EP95/02087 (WO 95/33375), published after the filing date of the present application, discloses a process for treating plants by injuring the aerial parts with a blasting material and applying plant treatment substances before or during injuring.

### SUMMARY OF THE INVENTION

An improved method for delivering an effective amount of an exogenous chemical substance to non-woody living tissue of a plant is provided by the present invention. The method comprises the steps of (a) causing an effective degree of local physical injury, involving death or significant damage to individual cells in said tissue at one or more sites therein or thereon, by means of material propelled from a device; and (b) applying said exogenous chemical substance to the plant at or close to at least one of the sites of said injury. It is important that step (b) is accomplished within an efficacious time period of step (a) and that said injury per se does not result in substantial removal of biomass from the plant nor exacerbate any condition of the plant sought to be remedied by said exogenous chemical substance.

The propelled material causing the local physical injury required in practicing the present invention may consist illustratively of discrete particles or a continuous or semi-continuous stream. The injury may result from purely mechanical forces such as those involved in impact or abrasion by the propelled material. Another way in which the propelled material may provide the required injury is by being delivered at a temperature inimical to living plant tissues. Yet another way in which the propelled material may provide the required injury is by the presence therein of a substance chemically corrosive to plant tissues. More than one of these mechanisms of injury may occur. Other mechanisms of injury may be involved without departing from the spirit or scope of the present invention.

In a preferred embodiment of the invention, steps (a) and (b) are accomplished very close together in time. The present invention also provides apparatus that can be used, in a single pass over plants to be treated, to propel material so as to cause the required local physical injury, and also to apply the exogenous chemical substance to the plant.

In another preferred embodiment of the invention, steps (a) and (b) are accomplished simultaneously and the exogenous chemical substance is contained in or on the propelled material used to cause the required local physical injury. The present invention provides apparatus that can be used for simultaneously inflicting the required injury and applying the exogenous chemical substance by propelling material containing the exogenous chemical substance. The present invention also provides a composition comprising both an agent of physical injury as defined herein and an exogenous chemical substance.

### OBJECTIVE OF THE INVENTION

It is an objective of the present invention to provide a method of delivery of an exogenous chemical substance to non-woody living tissue of plants by facilitating entry thereto, so that a higher proportion of said substance applied reaches its point of action in the plant, thus permitting lower rates than heretofore of said substance to be applied without loss of efficacy for its desired purpose.

A further objective of the present invention is to improve the rainfastness of an exogenously applied chemical substance, that is, the tendency of the substance to retain its efficacy on a treated plant when natural or artificial rain or overhead irrigation occurs within a short period, such as a few minutes to a few hours, after application.

A still further objective of the present invention is to expedite the manifestation of symptoms of the desired effect of an exogenous chemical substance applied to a plant.

A yet further objective of the present invention is to provide compositions comprising an exogenous chemical substance, which, when used in accordance with the invention, have any or all of the advantages just mentioned over heretofore used compositions.

These and other objectives which will be apparent from reading this specification are achieved in the invention which is more particularly described hereinafter.

### DESCRIPTION OF DRAWINGS

Figure 1 is a schematic diagram of an apparatus of one embodiment of the invention for chemically treating non-woody living tissue of a plant.

Figure 2 is a schematic diagram of an apparatus of another embodiment of the invention.

### DETAILED DESCRIPTION OF THE INVENTION

This invention provides an improved method of delivering an exogenous chemical substance to non-woody living tissue of a plant, whereby said substance is applied simultaneously or sequentially with local physical injury inflicted on the tissue of sufficient severity to kill or significantly damage individual cells. Without being bound by theory, it is believed that local wounding or other physical injury of the kinds achieved by practicing this invention facilitates uptake and transport of an exogenously applied chemical substance by partially or wholly overcoming critical barriers not only in the cuticle and cell walls, but also in the membranes separating non-living (apoplastic) from living (symplastic) parts of the tissue. Mechanisms other than physical barrier removal may be involved. The inventors were surprised, in light of the literature cited herein, to discover that such injury, involving death or at least significant damage to individual cells, could enhance, in some cases very markedly, the efficiency of delivery of a wide variety of exogenous chemicals.

An essential feature of the invention is that injury is caused not by blades, rollers, abrasive surfaces or similar means attached to a device, but instead by material propelled from a device wherein it is the material rather than the device that causes the injury. Indeed in preferred embodiments the device itself does not contact the plant or plants being treated. The use of propelled material allows the injury to non-woody tissue to be localized so that the tissue as a whole is not seriously damaged or killed, but rather the injury is confined to a single site or more typically a plurality of sites in or on otherwise undamaged tissue. Without being bound by theory, it is believed likely that the maintenance of healthy tissue around the sites of injury is important for the onward transport of the exogenous chemical substance after uptake.

As used herein, the term "exogenous chemical substance" means any chemical substance, whether naturally or synthetically derived, which is applied to a plant with the intent or result of said substance entering living cells or tissues of the plant. Examples of exogenous chemical substances include, but are not limited to, chemical pesticides (such as herbicides, algicides, fungicides, bactericides, viricides, insecticides, aphicides, miticides, nematicides, molluscicides and the like), plant growth regulators, fertilizers and nutrients, gametocides, defoliants, desiccants, mixtures thereof and the like.

"Delivery" of an exogenous chemical substance, as employed herein, means causing it to enter non-woody living tissue of a plant in such a way that the desired effect of said substance on the plant, on plant pathogens, on plant parasites or on invertebrate animal pests feeding on the plant, can be obtained. In many cases this requires onward transport of the exogenous chemical substance from its locus of uptake.

As used herein, the term "local physical injury" means injury confined to one or more restricted loci in or on non-woody living tissue of a plant, said injury resulting from a direct mechanical or chemical effect including but not restricted to impact, abrasion, puncture, freezing, dehydration or corrosion, but excluding indirectly induced effects in the tissue and excluding functional impairment of cell membranes not accompanied by physical breaching of said membranes, whether such impairment is caused directly or indirectly by the agency of injury.

The only situations where the inventors have found local physical injury caused by propelled material to be strongly antagonistic to the activity of an exogenous chemical substance, are where the condition sought to be remedied by the substance is itself aggravated or exacerbated by the injury. Such conditions will be readily understood by those of skill in the art; they include plant diseases induced by fungal or other pathogens which depend to some extent on surface injuries for infection of the plant. Where, for example, a fungicide is being used to combat such a pathogen, it may not be appropriate to use the method of the present invention to apply said fungicide.

Local physical injury as disclosed herein preferably does not per se (that is, in the absence of any treatment other than by the agency of said injury, and in particular in the absence of an exogenously applied chemical substance) do significant lasting damage to plants. The time period during which any such damage persists is not critical, but illustratively may be in the range from about 3 days to about 3 months, although greater or lesser periods may be suitable. Such injury is described herein as "temporary". Indeed plants receiving such injury per se show no noticeable long-lasting differences in growth, stature or phenotype from uninjured plants, though some scarring may persist. Where the target plant is a desirable plant such as for example a crop, turfgrass or ornamental, and the exogenous chemical substance being applied is for the purpose of improving the growth or appearance of the plant or protecting it from attack by a pest or pathogen, the short-term nature of the injury prescribed herein is not detrimental.

Where the plant being treated is an undesirable plant such as for example a weed, and the exogenous chemical substance being applied is for example a herbicide, the lack of lasting damage caused by the injury per se is advantageous. To illustrate this point, prior art methods involving physiological as opposed to physical injury to cell membranes tend to give lasting effects which may inhibit transport or performance of the herbicide. A good example is the use of a diphenylether herbicide such as acifluorfen as a co-treatment with a systemic herbicide such as glyphosate, wherein the rapid membrane-damaging effect of the diphenylether gives early symptoms of herbicidal activity but antagonizes the longer-term efficacy of the systemic herbicide. No such longer-term antagonism results from local physical injury as arises in the practice of the present invention.

If physical injury per se is too generalized or too severe, such that it results in substantial removal of plant biomass or death of a large proportion of cells, lasting damage may be done and such injury is outside the scope of the present invention. Furthermore, delivery of an exogenous chemical substance applied before, simultaneously with or after inflicting such injury may be reduced rather than improved, probably as a result of reduction in area of non-woody plant parts available for retention, uptake and transport to the site of action of the applied substance. Cutting, pruning, mowing and shredding are examples of injurious effects that remove substantial biomass and are therefore outside the scope of the present invention. However, the use of propelled material to cause local physical injury to plants which are previously or subsequently cut, pruned, mown or shredded in a separate operation is within the scope of the invention if an exogenous chemical substance is applied within an efficacious time period of said use of propelled material. Indeed it will sometimes increase the practicality of the method if plants have been cut, pruned, mown or otherwise have substantial amount of biomass removed before treatment according to the invention.

It will be readily appreciated by one skilled in the art that the degree of local physical injury can also be too slight to result in improved delivery of an exogenous chemical substance applied before, simultaneously with or after inflicting said injury. An effective degree of physical injury for the purposes of the present invention is one that results in delivery of an effective amount of an exogenous chemical substance when applied in accordance with the invention; usually but not restrictively it is a degree of injury that exposes both apoplast and symplast of non-woody tissue. Evidence that membrane barriers have been breached, so that both apoplast and symplast are exposed, is provided by a substantial increase in efflux of cell contents that may be observed after inflicting injury with propelled material. This efflux may be evident by organoleptic detection such as for example a wet or slick appearance on the surface of treated plant parts or by release of volatile substances having a detectable odor; in the laboratory efflux can be measured by assaying the electrolyte or protein content of an aqueous wash from the surface of treated parts, using a standard conductivity meter or commercially available protein assay method. Another technique for detecting cell rupture involves the use of known stains such as Evans blue applied to treated areas.

It is desirable, and preferred, to use a propelled material treatment that provides a plurality of small injuries. In general, there should be as many injury sites as possible on a leaf or other non-woody plant part up to a limit where overall damage to the plant part begins to restrict its ability to transport the exogenous chemical substance to its site of action, or where there is substantial loss of function leading to lasting damage. However, the precise optimum type and level of local physical injury is likely to depend on the exogenous chemical substance to be applied, the species, size and age of the plant to be treated, environmental conditions and other factors. One of skill in the art will readily experiment within the broad parameters disclosed herein to find the most appropriate propelled material treatment for any particular application.

As used herein, the term "non-woody" as applied to plant tissues or parts relates to leaves (including laminas, petioles, stipules, ochreas and sheaths), herbaceous stems and other above-ground organs not having a great degree of lignified secondary tissue development. Usually but not restrictively, the tissues targeted by the present invention are those covered by a cuticularized epidermis as opposed to a secondary phelloderm. Most commonly the tissues treated are located in leaves.

Application of the exogenous chemical substance must take place within an efficacious time period of inflicting injury by propelled material. These two essential steps of the method of the invention can occur in either order or simultaneously. It is preferred but not critical that application of the exogenous chemical substance be accomplished not more than about 5 days before and not more than about 5 days after the injury treatment. It is more preferred that if chemical application precedes the injury treatment the time period between the two steps is not more than about 2 days. In even more preferred embodiments of the invention, the two steps are accomplished simultaneously or almost simultaneously. This has the advantages that (1) both steps can be performed in a single pass over plants to be treated, (2) the means of accomplishing both steps can, if desired, be provided on the same apparatus, and (3) the exogenous chemical substance can, if desired, be contained in or on the propelled material or can itself comprise the propelled material causing the injury.

The propelled material is ejected from a suitable propelling device and may illustratively take any of a number of forms. The form of the propelled material to a great extent dictates the nature and design of the device which ejects it. The propelled material may, for example, comprise discrete solid or liquid particles, or a continuous or semi-continuous liquid stream.

A preferred particulate material is a solid abrasive. In some cases it may be possible to prepare the exogenous chemical substance itself as a solid particulate abrasive, and accomplish both steps of the method in a single operation. It is understood, however that if the propelled material is a blasting material (as defined in WO 95/33375) the injury step precedes the application of exogenous chemical substance. When a solid particulate abrasive is used, it may be ejected from the propelling device in a gaseous or liquid medium. A preferred gaseous medium is air, but nitrogen or carbon dioxide or gaseous mixtures may be useful alternatives. Acceleration of abrasive particles in such a medium may be achieved by application of force or pressure imparting energy to a mass of such particles, as for example in a sandblaster or nutblaster. A preferred liquid medium is water, in which the solid abrasive particles are suspended and wherein, if desired, the exogenous chemical is formulated.

Another preferred material is liquid, most preferably water, ejected from the propelling device with sufficient energy and power to cause the required degree of injury. A high-pressure water jet device or liquid hone may illustratively provide the required energy and power. Usually but not restrictively, such a water jet device is operated at a pressure in excess of about 250 lb/sq inch (1727 kiloPascals), preferably in excess of about 500 lb/sq inch (3445 kiloPascals) using a nozzle orifice diameter of about 0.002 inch (0.051 mm) to about 0.012 inch (0.30 mm) giving an application pattern in the range of 0-10 degrees, preferably 0-5 degrees. Preferred ranges for high-pressure water jet use according to the invention are energy flux index of about 0.004 BTU/sq inch (0.65 joules/cm²) to about 0.01 BTU/sq inch (1.6 joule/cm²) and power flux index of about 5000 (8.2 joules/hr/cm²) to about 40000 BTU/hour/sq inch (6.5 x 106 joules/cm²) at the point of contact with the tissue, although those skilled in the art will appreciate that lesser or greater indices may be appropriate if desired. The liquid may, if desired, also contain a suspended solid particulate abrasive.

Combinations of physical variables can be selected to apply the appropriate amount and rate of energy per unit area to achieve the desired degree of injury. These variables include mass flow, distance from the propelling device to the plant surface, force or pressure, collimation or dispersion of liquid, density and rheology of liquid, particle character and morphology including size, shape, angularity, hardness and density, and spray geometry and attitude.

Illustrative non-limiting examples of solid abrasive particles useful in practicing the present invention include those composed of any geological mineral, for example clay (such as kaolin), silica, quartz, garnet, alumina, barytes, carborundum or metal oxides, carbonates, sulfates or phosphates; any silicious or calcareous life form, for example diatoms; man-made resins; glasses; microcapsules; coated or uncoated crystals, including any solid form of the exogenous chemical substance or of a known adjuvant or inert formulation ingredient (such as ammonium sulfate); or plant-derived materials, for example ground walnut shells. An abrasive as used herein, however, includes any material that provides the local physical injury prescribed herein. A mixture of different abrasives may be found advantageous in particular situations.

Abrasive particles may be of any convenient size, but are typically in the range from about 10 µm to about 5 mm in diameter.

The amount of abrasive used per unit area is not believed to be critical, so long as an apparatus is available or can be designed that is capable of depositing that amount. Illustratively in the case of 200-mesh garnet as supplied by Barton Mines Corporation of North Creek, New York, the amount used will likely be in the range from about 0.1 lb/acre (0.11 kg/ha) to about 1000 lb/acre (1120 kg/ha), more probably in the range from about 1 lb/acre (1.12 kg/ha) to about 600 lb/acre (672 kg/ha), for example in the range from about 25 lb/acre (28 kg/ha) to about 300 lb/acre (336 kg/ha).

When solid abrasives or high-pressure liquid jets are used to provide local physical injury to non-woody plant tissue, the injury probably results from mechanical forces involved in impact and abrasion. An alternative is to heat or cool propelled material to a temperature inimical to plant tissues and rely partially or totally on the inimical temperature to cause the required injury. By "inimical" herein is meant a temperature outside the range permitting survival of non-woody tissue of a plant when experienced by said tissue for a very brief period such as a few seconds.

In a preferred embodiment of the invention, the inimical temperature of the propelled material is such as to cause local freezing injury to the tissue. Freezing injury in this case is acute physical injury caused by sudden exposure to an inimically low temperature; it includes but is not restricted to effects such as formation of intracellular or intercellular ice crystals, local dehydration or combinations thereof. To provide this kind of injury, the propelled material may for example comprise frozen water in any physical form, including ice crystals. In an especially preferred embodiment, the propelled material comprises carbon dioxide in its solid phase. As solid carbon dioxide sublimes on a plant surface it draws both the heat of sublimation and sensible heat from the surrounding tissue, creating the desired freezing injury. Solid carbon dioxide crystals may be accelerated in the propelling device to provide a combination of impact or abrasion injury and freezing injury; alternatively they may be ejected from the propelling device with little force and allowed to fall on the plant surface as carbon dioxide "snow" primarily under the influence of gravity.

When the propelled material is frozen water or carbon dioxide in its solid phase, the exogenous chemical substance may optionally be mixed or formulated with the propelled material.

Yet another way in which a propelled material can provide the necessary injury is through chemical corrosion. In one embodiment of the invention, the propelled material comprises a chemical substance corrosive to non-woody living tissue of a plant. In the sense employed herein, corrosion involves the chemical disassembly of lipids and polymers so as to damage or destroy mechanical support and integrity of the tissue. A preferred corrosive agent is an aqueous solution of a strong alkali, for example an alkali or alkaline earth metal hydroxide or ammonia. The corrosive agent may be applied by conventional spraying in a separate or preferably the same spray solution as contains the exogenous chemical substance.

Exogenous chemical substances which can usefully be applied by the method of the present invention are normally, but not exclusively, those which are expected to have a beneficial effect on the overall growth or yield of desired plants such as crops, or a deleterious or lethal effect on the growth of undesirable plants such as weeds. Preferred substances are pesticides, plant growth regulators and gametocides. Particularly preferred substances are herbicides, especially those that are normally applied post-emergence to the foliage of unwanted vegetation, though the method may be effective even with herbicides that normally require pre-emergence application.

Herbicides which may be applied by the method of the present invention include but are not limited to any listed in standard reference works such as the Herbicide Handbook, Weed Science Society of America, 7th edition (1994). Illustratively they include asulam, bentazon, bialaphos, bipyridyls such as paraquat, bromacil, cyclohexenones such as sethoxydim, dicamba, diphenylethers such as acifluorfen, fomesafen and oxyfluorfen, fosamine, flupoxam, glufosinate, glyphosate, hydroxybenzonitriles such as bromoxynil, imidazolinones such as imazethapyr, isoxaben, phenoxies such as 2,4-D, phenoxypropionates such as quizalofop, picloram, substituted ureas such as fluometuron, sulfonylureas such as chlorimuron, chlorsulfuron, halosulfuron and sulfometuron, and triazines such as atrazine and metribuzin. Herbicidally active derivatives of any known herbicide are also within the scope of the present invention if applied by the method herein described. A herbicidally active derivative is any compound which is a minor structural modification, most commonly but not restrictively a salt or ester, of a known herbicide, said compound retaining the essential activity of the parent herbicide though not necessarily having a potency equal to that of the parent herbicide. Usually but not restrictively said compound converts to the parent herbicide before or after it enters the treated plant. Mixtures or coformulations of a herbicide with other ingredients, or of more than one herbicide, are likewise within the present scope.

An especially preferred herbicide for use by the method of the present invention is glyphosate (N-phosphonomethylglycine), a salt or ester thereof, or a compound which is converted to glyphosate in plant tissues or which otherwise provides glyphosate ion. Illustratively, glyphosate and its salts useful herein are disclosed in US Patent No. 3,799,758. Glyphosate salts that can be used according to this invention include but are not restricted to alkali metal, for example sodium and potassium, salts; ammonium salt; alkylamine, for example dimethylamine and isopropylamine, salts; alkylsulfonium, for example trimethylsulfonium, salt; mixtures thereof and the like.

To obtain a useful degree of the desired effect of any exogenous chemical substance applied to a plant, an effective rate must be applied, usually expressed as amount of substance per unit area treated. What constitutes a "useful degree" is to some extent arbitrary. For example, in the case of a herbicide, the amount per unit area giving, say, 80% control of a plant species as measured by growth reduction or mortality could illustratively be defined as the effective rate. It is a major benefit of the method of the present invention that the effective rate of the exogenous chemical substance is generally lower, in many cases substantially lower, than when the same substance is applied in the absence of injury by propelled material.

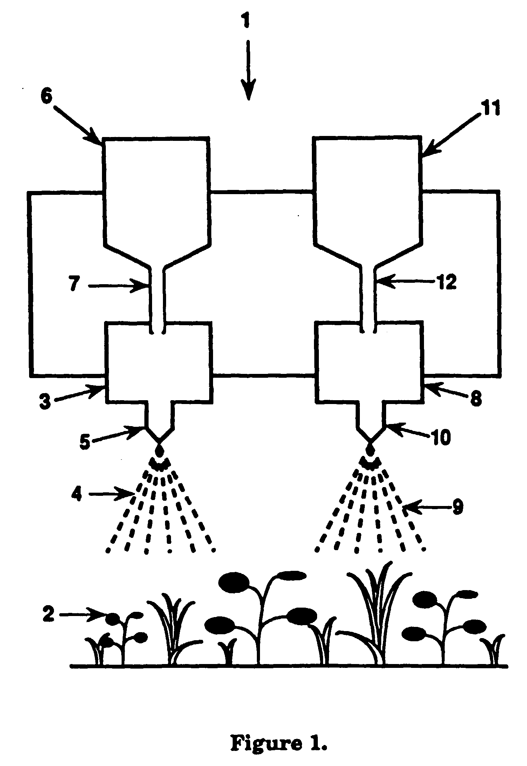

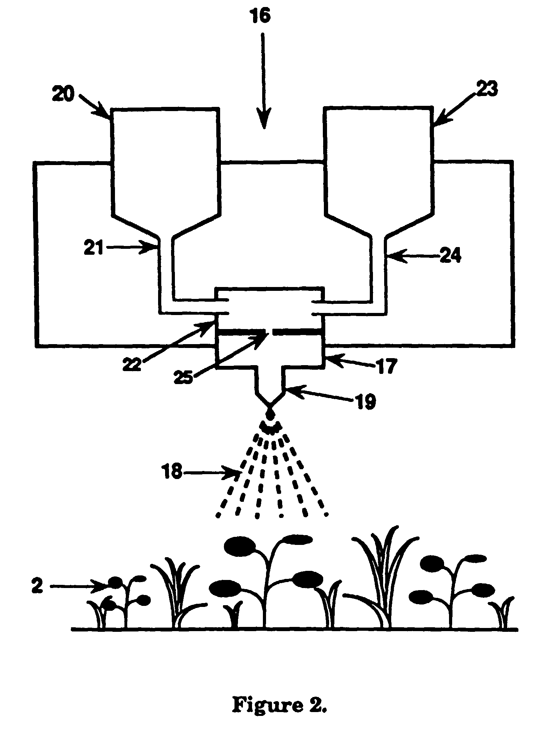

Another embodiment of the present invention is apparatus for accomplishing, in a single pass over plants to be treated, both essential steps of the method. It being understood that the propelled material is not blasting material (as defined in WO 95/33375). Illustrative examples of such apparatus are shown schematically in Figures 1 and 2 hereof and described below.

Apparatus as provided herein comprises (a) a means for propelling material which on impact or contact with non-woody living tissue of a plant causes an effective degree of local physical injury, involving death or significant damage to individual cells at one or more sites in said tissue; and (b) a means for applying an exogenous chemical substance to the plant at or close to at least one of the sites of said injury; wherein means (a) and (b) are so arranged that application of the chemical substance is accomplished before, simultaneously with or after the propelled material impacts or contacts the tissue, it being understood, however that if the propelled material is a blasting material (as defined in WO 95/33375), the injury step (a) precedes the application of exogenous chemical substance (b). It is emphasized that means (a) and (b) may be one and the same device, or they may be alike but separate, or they may be different. Said injury per se does not result in substantial removal of biomass from the plant, nor should it exacerbate any condition of the plant sought to be remedied by said exogenous chemical substance.

Optionally the apparatus may further comprise (c) a means for raising or lowering the temperature of the propelled material to an inimical temperature as defined herein, at or prior to the time of its ejection from the propelling means.

With reference now to Figure 1 which is a nonlimiting illustration, it is noted that the apparatus **1,** consisting of one or integral multiple parts has a means for locomotion, or is attachable to a means for locomotion (not shown), which permits movement of the apparatus over a plant or plants to be treated **2.** A propelling or accelerating means **3** is an element of the apparatus **1** such that material **4** ejected from the propelling means **3** is directed towards the plant or plants **2** via a dispersing and targeting means **5,** also an element of apparatus **1**. A reservoir **6** for the material **4** to be ejected is an element of apparatus **1** and is connected by conduit **7** to the propelling means **3**. Exogenous chemical application means **8** is an element of the apparatus **1** in a position juxtaposed to propelling means **3** such that exogenous chemical substance **9** emitted from the exogenous chemical application means **8** via a dispersing and targeting means **10,** also an element of apparatus **1,** is deposited on the plant or plants **2** before or after the propelled material **4** contacts the plant or plants **2**. It is understood that the deposition of material **4** and chemical substance **9** can be nearly simultaneous or be slightly displaced in time. The relative position of propelling means **3** and chemical application means **8** is such that they move in tandem to one another. A reservoir **11,** an element of apparatus **1,** for the material **9** to be emitted is connected by conduit **12** to the exogenous chemical application means **8**. If propelled material **4** comprises solid abrasive particles propelled in a gaseous medium, propelling means **3** can be any conventional device, such as for example a sandblaster or a modified form thereof, designed to accelerate said particles according to the method of this invention, whereby the particles are dispersed and targeted by a means **5** toward the plant or plants **2**. Alternatively, propelled material **4** may be a fluid, for example primarily water, in which case propelling means **3** can be any conventional device, such as for example, a high-pressure water jet device or any of a number of similarly functioning devices for accelerating water or other fluids where the fluid stream is constricted and forced through a narrow aperture or nozzle means **5** which emits the fluid in a continuous or semi-continuous stream or series of droplets toward the plant or plants to be treated **2**. If the mechanism by which propelled material **4** inflicts localized injury to non-woody plant tissue is not dependent on mechanical forces such as those involved in impact or abrasion by ejected propelled material, but is instead a mechanism of chemical corrosion or inimical temperature, propelling means **3** is not necessarily of a design that significantly accelerates material **4**. Exogenous chemical application means **8** can be any conventional device for applying chemicals to plants, such as for example a hydraulic, air-assisted or rotating disk sprayer, a ropewick applicator, carpeted roller or the like. Apparatus 1 may be designed with the appropriate adjustable valves, metering devices, gauges and controls to precisely deliver selected amounts, either predetermined or optionally, continuously varied during treatment, for either the abrasive material or the exogenous chemical or both, on demand at a determinable speed and rate of application in a desired direction. If desired a plurality of apparatus 1 may be employed in a variety of configurations.

With reference now to Figure 2 which is a nonlimiting illustration, it is noted that the apparatus **16,** consisting of one or integral multiple parts as needed to cover the targeted area, has a means for locomotion, or is attachable to, a means for locomotion (not shown), which permits movement of the apparatus over a plant or plants to be treated **2**. A propelling or accelerating means **17** is an element of the apparatus **16** such that material **18** ejected from the propelling means **17,** also an element of the apparatus **16,** is directed towards the plant or plants **2** via a dispersing and targeting means **19,** another element of apparatus **16**. A reservoir **20** for an abrasive substance is an element of apparatus **16** and is connected by conduit **21** to a mixing means **22,** another element of apparatus **16**. A reservoir **23** containing an exogenous chemical substance is an element of apparatus **16** and is connected by conduit **24** to the mixing means **22**. The mixing means **22,** which is appropriately juxtaposed to the propelling means **17** by a conduit or portal **25,** allows mixing of the abrasive agent and exogenous chemical immediately prior to or during the action of the propelling means **17** as desired by the methods described in this invention. The mixing means **22** can mix solid particulate forms of the abrasive material with a liquid form of the exogenous chemical substance or vice versa when the material **18** ejected is applied in fluid form as for example by a conventional high pressure water jet or similar device operating at sufficiently high power to invoke the method described in this invention. Alternatively, the mixing means **22** can mix solid particulate forms of each substance, which may simultaneously require grinding or shaving of either or both materials for adequate mixing when the material **18** ejected is applied as a dry particulate, as for example by a common sandblaster or similar device. A further alternative is that the mixing chamber **22** can be designed to combine liquid forms of abrasive material or exogenous chemical substance or either as a solid alone with the other as a liquid, which can then be formed into a solid particulate for example by freezing or evaporative drying and then delivered by the propelling means **17** as a solid particulate via the dispersing and targeting means **19** to the plant or plants **2**. Apparatus **16** may be designed with the necessary adjustable valves, metering devices, gauges and controls to precisely deliver known amounts or predetermined amounts or continuously changing ratios of either the abrasive material and/or the exogenous chemical, on demand at a determinable speed and rate of application in a desired direction. If desired a plurality of apparatus **1** may be employed in a variety of configurations.

A still further embodiment of the present invention is a composition which supplies both the exogenous chemical substance and the agency of local physical injury. In addition to the exogenous chemical substance, the composition may illustratively comprise one or more of the following agencies of injury in sufficient amount to have the desired injurious effect: a solid particulate abrasive as described more fully above except blasting material as defined in WO 95/33375; a chemical corrosive, more particularly an alkali such as an alkali or alkaline earth metal hydroxide or ammonia; or pressurized liquid carbon dioxide.

Those of skill in the art will recognize that individual plant conditions, weather and growing conditions and particular exogenous chemicals selected will impact the degree of effectiveness achieved in practicing this invention. The amounts of effective exogenous chemicals employed will be a function of the above conditions to achieve acceptable performance. Those of skill in the art will also recognize that one or more advantages may be apparent depending on use conditions and exogenous chemicals selected and that not all advantages mentioned herein are always manifested.

### EXAMPLES

### Examples 1-9

Seeds of species to be treated in these Examples illustrative of the invention were planted in 3-inch (7.6 cm) or 4-inch (10.1 cm) square pots filled with a steam-sterilized soil mix containing a small amount of fertilizer. For some species the soil mix consisted of either 50% Metromix 350 plus 50% silt loam to which 100 g/cu ft (3.57 kg/m³) Osmocote fertilizer were added, and the seeds were covered with the same soil mix without added fertilizer. For other species the soil mix consisted of 100% silt loam to which 35 g/cu ft (1.25 kg/m³) IBDU fertilizer were added, and the seeds were covered with a mix of 50% Rediearth plus 50% silt loam without added fertilizer. The pots were placed in a greenhouse or growth chamber with sub-irrigation, and emerging seedlings were thinned as needed, usually to 2 plants per pot. Generally plants were treated postemergence according to a method of the invention 10 to 20 days after planting, depending on species. If rooting appeared to be a problem (usually this was confined to grass species), light overhead watering was provided until emergence in order to encourage better root growth. Perennial grasses were propagated in the same manner, except that they were allowed to develop rhizomes, and were trimmed back regularly to approximately 1.5-2 inches (3.8-5.0 cm) in height using hand-held electric clippers. They were then treated postemergence according to a method of the invention more than 1 month after planting.

The species tested in these Examples were:
Example 1 velvetleaf (Abutilon theophrasti, ABUTH)
Example 2 cocklebur (Xanthium strumarium, XANST)
Example 3 barnyardgrass (Echinochloa crusgalli, ECHCG)
Example 4 sicklepod (Cassia obtusifolia, CASOB)
Example 5 hemp sesbania (Sesbania exaltata, SEBEX)
Example 6 kochia (Kochia scoparia, KCHSC)
Example 7 Russian thistle (Salsola kali, SASKR)
Example 8 bermudagrass (Cynodon dactylon, CYNDA)

Example 9 guineagrass (Panicum maximum, PANMA) Greenhouse and growth chamber temperature settings for all species except SASKR were 85°F (29°C) day, 70°F (21°C) night, with a 14-14.5 h photoperiod, while for SASKR temperature settings were 65°F (18°C) day, 50°F (10°C) night, with a 14-14.5 h photoperiod. The same settings were maintained before and after treatment.

Physical injury in these Examples was inflicted on the above-ground portions of the plants by a propelled particulate abrasive, 200-mesh garnet, which has an average particle size of approximately 75 µm. This was applied using a hand-held Sears Craftsman™ sandblaster Model No. 491.167060 driven by compressed air, with nozzle held approximately 20 inches (51 cm) above the plant canopy, operating at maximum house air pressure, approximately 50 lb/sq inch (350 kiloPascal). In most cases, but depending on plant species, 3 passes were made with the sandblaster moving at about 1 ft/s (30 cm/s), usually delivering more than 500 lb/acre (560 kg/ha) garnet in total. Half the pots in each study received an abrasion treatment as just described, and half received no abrasion treatment.

Plants were then assigned to different herbicide and rain treatments in a factorial experimental design with generally 3 replications. Abraded and unabraded plants for each treatment were sprayed at the same time using a track sprayer calibrated to deliver 20 gallons per acre (187 liters/hectare) water with an 8002E nozzle having a 50-mesh screen, 16 inches (41 cms) above the plant canopy. In these Examples the herbicide used was glyphosate as its isopropylamine salt, in the form of the aqueous concentrate formulation MON 2139 of Monsanto Company. Spray solutions were made from stock solutions prepared by dilution of MON 2139 in water. The abbreviation "a.e." herein means acid equivalent.

For greenhouse studies, the pots were then divided in such a manner that the plants that were to receive "rain" (overhead irrigation) were placed in a separate area from those receiving no "rain". Within each area, pots forming the first replicate were placed in one block in order of the treatment list for ease of viewing and the remaining replicates were randomly placed in separate blocks. To simulate rain, plants were given approximately 0.125 inch (0.32 cm) of overhead irrigation with an automatic irrigation system, usually within 1 hour after herbicide application.

For growth chamber studies, the plants to receive "rain" were temporarily placed in a greenhouse and given approximately 0.125 inch (0.32 cm) of overhead irrigation with the automatic irrigation system, usually within 1 hour after herbicide application. The first replicate was placed in one block in order of the treatment list for ease of viewing and the remaining replicates were randomly placed in separate blocks in the growth chamber.

After an interval of 12-18 days, which varied from test to test, a visual evaluation was performed to estimate herbicidal efficacy as percent control of treated plants compared to untreated check plants. Average percent control was computed for each treatment and is presented in the Tables below.

### Example 1: percent control of ABUTH 12 days after glyphosate application

| glyphosate rate (kg a.e./ha) | no rain | | rain | |
|---|---|---|---|---|
| | unabraded | abraded | unabraded | abraded |
| 0 | 0 | 0 | | |
| 0.014 | 0 | 57 | 0 | 45 |
| 0.028 | 0 | 72 | 0 | 60 |
| 0.056 | 3 | 80 | 7 | 77 |
| 0.11 | 60 | 92 | 0 | 78 |
| 0.22 | 75 | 98 | 15 | 93 |
| 0.45 | 92 | 100 | 38 | 100 |
| 0.90 | 99 | | 60 | |

### Example 2: percent control of XANST 15 days after glyphosate application

| glyphosate rate (kg a.e./ha) | no rain | | rain | |
|---|---|---|---|---|
| | unabraded | abraded | unabraded | abraded |
| 0 | 0 | 0 | | |
| 0.014 | 0 | 37 | 0 | 7 |
| 0.028 | 7 | 30 | 0 | 50 |
| 0.056 | 13 | 83 | 0 | 77 |
| 0.11 | 67 | 97 | 7 | 89 |
| 0.22 | 92 | 100 | 62 | 100 |
| 0.45 | 100 | 100 | 88 | 100 |
| 0.90 | 100 | | 95 | |

### Example 3: percent control of ECHCG 15 days after glyphosate application

| glyphosate rate (kg a.e./ha) | no rain | | rain | |
|---|---|---|---|---|
| | unabraded | abraded | unabraded | abraded |
| 0 | 7 | 0 | | |
| 0.014 | 8 | 8 | 0 | 3 |
| 0.028 | 0 | 7 | 7 | 17 |
| 0.056 | 13 | 20 | 0 | 10 |
| 0.11 | 27 | 57 | 8 | 35 |
| 0.22 | 83 | 81 | 35 | 73 |
| 0.45 | 97 | 97 | 74 | 86 |
| 0.90 | 100 | | 86 | |

### Example 4: percent control of CASOB 13 days after glyphosate application

| glyphosate rate (kg a.e./ha) | no rain | | rain | |
|---|---|---|---|---|
| | unabraded | abraded | unabraded | abraded |
| 0 | 5 | 5 | | |
| 0.028 | 35 | 45 | 0 | 63 |
| 0.056 | 65 | 80 | 13 | 80 |
| 0.11 | 95 | 85 | 53 | 84 |
| 0.2 | 98 | 95 | 65 | 100 |
| 0.45 | 98 | 94 | 78 | 90 |
| 0.90 | 100 | 100 | 82 | 100 |
| 1.40 | 100 | | 83 | |

### Example 5: percent control of SEBEX 14 days after glyphosate application

| glyphosate rate (kg a.e./ha) | no rain | | rain | |
|---|---|---|---|---|
| | unabraded | abraded | unabraded | abraded |
| 0 | 0 | 0 | | |
| 0.11 | 0 | 0 | 0 | 10 |
| 0.21 | 0 | 7 | 0 | 20 |
| 0.43 | 0 | 17 | 0 | 20 |
| 0.84 | 23 | 55 | 7 | 53 |
| 1.1 | 60 | 78 | 7 | 58 |
| 1.40 | 73 | 75 | 13 | 75 |
| 1.68 | 76 | | 57 | |

### Example 6: percent control of KCHSC 16 days after glyphosate application

| glyphosate rate (kg a.e./ha) | no rain | | rain | |
|---|---|---|---|---|
| | unabraded | abraded | unabraded | abraded |
| 0 | 0 | 12 | | |
| 0.04 | 3 | 23 | 8 | 50 |
| 0.028 | 0 | 37 | 5 | 40 |
| 0.056 | 5 | 27 | 15 | 23 |
| 0.11 | 13 | 37 | 15 | 63 |
| 0.2 | 58 | 84 | 20 | 60 |
| 0.45 | 99 | 100 | 37 | 95 |
| 0.90 | 100 | | 53 | |

### Example 7: percent control of SASKR 18 days after glyphosate application

| glyphosate rate (kg a.e./ha) | no rain | | rain | |
|---|---|---|---|---|
| | unabraded | abraded | unabraded | abraded |
| 0 | 3 | 3 | | |
| 0.014 | 0 | 30 | 0 | 28 |
| 0.028 | 13 | 22 | 0 | 30 |
| 0.056 | 17 | 27 | 7 | 30 |
| 0.11 | 17 | 42 | 10 | 37 |
| 0.2 | 10 | 75 | 0 | 85 |
| 0.45 | 84 | 94 | 0 | 85 |
| 0.90 | 99 | | 45 | |

### Example 8: percent control of CYNDA 15 days after glyphosate application

| glyphosate rate (kg a.e./ha) | no rain | | rain | |
|---|---|---|---|---|
| | unabraded | abraded | unabraded | abraded |
| 0 | 18 | 0 | | |
| 0.056 | 10 | 3 | 0 | 3 |
| 0.1 | 10 | 10 | 0 | 0 |
| 0.2 | 35 | 42 | 3 | 10 |
| 0.45 | 59 | 77 | 27 | 53 |
| 0.89 | 82 | 83 | 53 | 71 |
| 1.12 | 98 | 98 | 68 | 79 |
| 1.40 | 99 | | 62 | |

### Example 9: percent control of PANMA 15 days after glyphosate application

| glyphosate rate (kg a.e./ha) | no rain | | rain | |
|---|---|---|---|---|
| | unabraded | abraded | unabraded | abraded |
| 0 | 0 | 0 | | |
| 0.056 | 12 | 15 | 10 | 42 |
| 0.1 | 12 | 45 | 13 | 56 |
| 0.2 | 50 | 60 | 52 | 60 |
| 0.45 | 85 | 73 | 74 | 82 |
| 0.89 | 95 | 87 | 83 | 94 |
| 1.1 | 100 | 85 | 92 | 100 |
| 1.40 | 99 | | 99 | |

### Example 10

In this Example illustrative of the invention, velvetleaf (Abutilon theophrasti, ABUTH) seeds were planted in 4-inch (10.1 cm) square pots containing 100% silt loam soil to which 35 grams/cu ft (1.25 kg/m³) IBDU fertilizer was added, and covered with a mix of 50% Rediearth plus 50% silt loam. The pots were sub-irrigated and the seedlings thinned after emergence to 2 plants per pot. The plants were grown in a greenhouse with temperature settings of 85°F (29°C) day, 70°F (21°C) night, with a 14-14.5 h photoperiod.

Sixteen days after planting, half the plants were abraded with propelled 200-mesh garnet exactly as described for Examples 1-9, and the other half were unabraded.

Plants were then assigned to different herbicide treatments with 3 replications. The herbicide used in this Example was glyphosate as its isopropylamine salt, applied as a granular composition prepared by the following procedure. A 10% weight/weight glyphosate a.e. solution was prepared by first diluting 13 g of a 62.7% solution of the isopropylamine salt of glyphosate with 47 g of water. To a 1-gallon (3.8 liter) bottle was added 340 g of amorphous silica (HiSil 233). This bottle was placed on a roller mill and the 10% glyphosate a.e. solution was added with a syringe. The material was tumbled until it appeared homogeneous. This produced a powder containing 1.5% weight/weight glyphosate a.e. A 0.75% weight/weight glyphosate a.e.powder was made by mixing 200 g of the 1.5% a.e. powder with 200 g of HiSil 233.

An amount of the 0.75% a.e. powder was pre-weighed for each rate to cover a 3 ft x 3 ft (0.9 meter x 0.9 meter) square, which was measured out and marked on a benchtop. Total volume applied was brought up to the volume used for the highest rate using granular starch. All particles had been ground and screened to an approximate particle size of 75 µm. All replicates for a given glyphosate rate were then randomly placed in the marked off area, and the dry formulation plus starch mixture was evenly sprinkled over the top of the area using a shaker bottle with a lid having several 0.125-inch (0.32 cm) holes drilled in it.

One set of plants that received the granular treatments was then given a light "rain" treatment by placing pots in a spray tower calibrated to deliver 20 gallons/acre (187 liters/hectare) water with an 8002E nozzle having a 50-mesh screen, 16 inches (41 cm) above the plant canopy. All plants were then placed in the greenhouse for the remainder of the experiment, and sub-irrigated. The first replicate was placed in one block in order of the treatment list for ease of viewing and the remaining replicates were randomly placed in two separate blocks.

After an interval of 14 days after herbicide application, a visual evaluation was performed to estimate herbicidal efficacy as percent control of treated plants compared to untreated check plants. Average percent control was computed for each treatment and is presented in the Table below.

### Example 10: percent control of ABUTH 14 days after glyphosate application

| glyphosate rate (kg a.e./ha) | no rain | | light rain | |
|---|---|---|---|---|
| | unabraded | abraded | unabraded | abraded |
| 0 | 0 | 3 | 0 | 0 |
| 0.01 | 0 | 3 | 0 | 0 |
| 0.02 | 3 | 0 | 0 | 8 |
| 0.04 | 0 | 0 | 0 | 23 |
| 0.08 | 0 | 20 | 0 | 28 |
| 0.17 | 0 | 31 | 3 | 69 |
| 0.34 | 7 | 44 | 0 | 43 |
| 0.67 | 0 | | | |

### Examples 11-12

In these Examples illustrative of the invention, velvetleaf (Abutilon theophrasti, ABUTH) seeds were planted in 4-inch (10.1 cm) square pots containing 100% silt loam soil to which 35 grams/cu ft (1.25 kg/m³) IBDU fertilizer was added, and covered with a mix of 50% Rediearth plus 50% silt loam. The pots were sub-irrigated and the seedlings thinned after emergence to 2 plants per pot. The plants were grown in a greenhouse with temperature settings of 85°F (29°C) day, 70°F (21°C) night, with a 14-14.5 h photoperiod.

Abrasion was applied using propelled 200-mesh garnet exactly as described for Examples 1-9. The herbicide used in these Examples was glyphosate as its isopropylamine salt, applied as diluted MON 2139, exactly as described for Examples 1-9.

The time period between abrasion and herbicide application was varied as follows. In Example 11, all abrasion treatments were applied within a short period of time, and herbicide applications were made 2, 4 and 24 hours after abrasion. A set of abraded plants received no herbicide at any time. In addition, herbicide applications were made to unabraded plants at two times: (i) at the time of abrasion, and (ii) 24 hours after the time of abrasion. In Example 12, all herbicide applications were made within a short period of time, and abrasion was applied 5, 2 and 1 days before herbicide application. In addition, herbicide application was made to unabraded plants.

Three replications were performed of every treatment. After treatment, all plants were placed in the greenhouse for the remainder of the experiment, and sub-irrigated. The first replicate was placed in one block in order of the treatment list for ease of viewing and the remaining replicates were randomly placed in two separate blocks.

After an interval of 12-14 days after herbicide application, a visual evaluation was performed to estimate herbicidal efficacy as percent control of treated plants compared to untreated check plants. Average percent control was computed for each treatment and is presented in the Tables below.

### Example 11: percent control of ABUTH 14 days after glyphosate application

| treatment | glyphosate rate (kg a.e./ha) | | | |
|---|---|---|---|---|
| | 0 | 0.056 | 0.11 | 0.22 |
| abraded before | | | | |
| 24 h | | 45 | 76 | |
| 4 h | | 79 | 94 | |
| 2 h | | 73 | 85 | |
| 0 h | 0 | 70 | 78 | |

| not abraded | | | | |
|---|---|---|---|---|
| (i) | 0 | 0 | 5 | 77 |
| (ii) | | 0 | 30 | 63 |

### Example 12: percent control of ABUTH 12 days after glyphosate application

| treatment | glyphosate rate (kg a.e./ha) | | | | | |
|---|---|---|---|---|---|---|
| | 0 | 0.056 | 0.11 | 0.22 | 0.45 | 0.89 |
| abraded before | | | | | | |
| 5 days | 0 | 52 | 73 | 97 | 100 | 100 |
| 2 days | 0 | 76 | 93 | 100 | 100 | 100 |
| 1 day | 0 | 77 | 92 | 100 | 100 | 100 |
| 0 days | 0 | 79 | 95 | 100 | 100 | 100 |

### Example 13

In this Example illustrative of the invention, a field test was conducted to confirm the practical efficacy of the method disclosed. A solid stand of FS-435 winter wheat (TRZAW) was planted on a farm in west central Illinois approximately 1 month prior to treatment at a seeding rate of 90 lb/acre (101 kg/ha).

A split-plot experimental design was used, including 3 replicates. Herbicide treatments were applied to main plots; one section within each plot received an abrasion treatment as described below and the remainder of the plot was not abraded. Abrasion was performed using a hand-held Sears Craftsman™ sandblaster as used in Examples 1-9, the air source for which was an air compressor set at 120 lb/sq inch (827 kiloPascals). During operation of the sandblaster, the pressure dropped to approximately 110 lb/sq in (758 kiloPascals). The sandblaster nozzle was held 20 inches (51 cm) above the TRZAW canopy. A 2 ft x 6 ft (61 cm x 183 cm) box, 20 inches (51 cm) high having no top or bottom was set in the portion of the plot which was to be abraded, and 4 passes of the sandblaster, each covering at least a 4-inch (10-cm) width, were made longitudinally in about 4 seconds for each pass. The box was then moved adjacent to the first abraded area, and abrasion of a second area within the plot occurred exactly as described above. Sections of all of the plots were abraded before spray treatments began, with the whole abrasion process taking 2 hours, 10 minutes.

A backpack plot sprayer pressurized with CO₂ was used to apply the herbicide treatments. The total sprayed area of each plot was 6.7 ft x 20 ft (2.0 meters x 6.6 meters), with an abraded area of 2 ft x 12 ft (0.6 meter x 3.6 meters). A boom having four 11001 tapered flat-fan nozzles with 50-mesh screens was used to deliver 10 gallons/acre (94 liters/hectare) of spray solution, at 32 lb/sq inch (220 kiloPascals), traveling at approximately 3 miles/hr (4.9 kilometers/h). In addition to TRZAW, weed species were sprayed including buttercup (Ranunculus sp., RANSS), pepperweed (Lepidium sp., LEPSS), and several other winter annuals which were scattered in the plots.

Herbicides tested in this Example were glyphosate as its isopropylamine salt, in the form of the aqueous concentrate formulation MON 2139 of Monsanto Company; glufosinate as its ammonium salt, in the form of the aqueous concentrate formulation sold under the name of Basta by AgrEvo; and paraquat as its dichloride salt, in the form of the aqueous concentrate formulation sold under the name of Gramoxone Super by Zeneca. The herbicides were pre-measured and added to the water volume using a triple-rinse procedure. Eighteen days after treatment, visual evaluation was performed to estimate herbicidal efficacy as percent control of each species in treated plots compared to untreated check plots. Average percent control was computed for each treatment and is presented in the Table below.

### Example 13: percent control of three species 18 days after herbicide application

| herbicide rate (kg a.e. or a.i./ha) | TRZAS | | RANSS | | LEPSS | |
|---|---|---|---|---|---|---|
| | not abr. | abr. | not abr. | abr. | not abr. | abr. |
| no herbicide | 0 | 10 | 0 | 5 | 0 | 5 |

| glyphosate | | | | | | |
|---|---|---|---|---|---|---|
| 0.069 | 32 | 76 | 28 | 58 | 30 | 60 |
| 0.140 | 63 | 89 | 58 | 79 | 63 | 82 |
| 0.28 | 68 | 87 | 41 | 64 | 58 | 84 |
| 0.42 | 67 | 88 | 55 | 75 | 60 | 83 |
| 0.56 | 69 | 92 | 53 | 74 | 68 | 78 |
| 0.84 | 76 | 94 | 59 | 72 | 68 | 84 |

| glufosinate | | | | | | |
|---|---|---|---|---|---|---|
| 0.069 | 11 | 46 | 17 | 53 | 25 | 50 |
| 0.140 | 40 | 86 | 35 | 81 | 40 | 78 |
| 0.28 | 66 | 85 | 56 | 75 | 60 | 87 |
| 0.42 | 86 | 95 | 81 | 94 | 82 | 90 |
| 0.56 | 93 | 99 | 92 | 97 | 89 | 95 |
| 1.12 | 96 | 100 | 86 | 100 | 93 | 99 |

| paraquat | | | | | | |
|---|---|---|---|---|---|---|
| 0.069 | 25 | 75 | 35 | 56 | 40 | 68 |
| 0.140 | 30 | 82 | 39 | 63 | 45 | 67 |
| 0.28 | 48 | 92 | 49 | 71 | 60 | 76 |
| 0.42 | 60 | 95 | 47 | 65 | 64 | 79 |
| 0.56 | 64 | 97 | 50 | 67 | 66 | 82 |
| 1.12 | 86 | 99 | 62 | 85 | 79 | 87 |

### Example 14

Seeds of weed species to be treated in these Examples illustrative of the invention were planted in 3-inch (7.6 cm) or 4-inch (10.1 cm) square pots filled with a steam-sterilized soil mix containing a small amount of fertilizer. For some species the soil mix consisted of either 50% Metromix 350 plus 50% silt loam to which 100 g/cu ft (3.57 kg/m³) Osmocote fertilizer were added, and the seeds were covered with the same soil mix without added fertilizer. For other species the soil mix consisted of 100% silt loam to which 35 g/cu ft (1.25 kg/m³) IBDU fertilizer were added, and the seeds were covered with a mix of 50% Rediearth plus 50% silt loam without added fertilizer. The pots were placed in a greenhouse with sub-irrigation, and emerging seedlings were thinned as needed, usually to 2 plants per pot. Generally plants were treated postemergence according to a method of the invention 10 to 20 days after planting, depending on species. If rooting appeared to be a problem (usually this was confined to grass species), light overhead watering was provided until emergence in order to encourage better root growth.

The species tested in this Example were velvetleaf (Abutilon theophrasti, ABUTH) and wild proso millet (Panicum miliaceum, PANMI). Greenhouse temperature settings were 85°F (29°C) day, 70°F (21°C) night, with a 14-14.5 h photoperiod. The same settings were maintained before and after treatment.

Physical injury in these Examples was inflicted on the above-ground portions of the plants by a propelled particulate abrasive, 200-mesh garnet, which has an average particle size of approximately 75 µm. This was applied using a hand-held Sears Craftsman™ sandblaster as used in Examples 1-9, driven by compressed air, with nozzle held 20 inches (51 cm) above the plant canopy, operating at maximum house air pressure, approximately 50 lb/sq inch (345 kiloPascals). In most cases, but depending on plant species, 3 passes were made with the sandblaster moving at about 1 ft/s (30 cm/s), usually delivering more than 500 lb/acre (560 kg/ha) garnet in total. Half the pots in each study received an abrasion treatment as just described, and half received no abrasion treatment.

Plants were then assigned to different herbicide treatments in a factorial experimental design with 3 replications. Abraded and unabraded plants for each treatment were sprayed at the same time using a track sprayer calibrated to deliver 20 gallons/acre (187 liters/hectare) water with an 8002E nozzle having a 50-mesh screen, 16 inches (41 cm) above the plant canopy.

In this Example the herbicides used were bentazon as technical product; atrazine technical product; bromacil as technical product ; imazethapyr as its ammonium salt, in the form of the aqueous concentrate formulation sold under the name of Pursuit by American Cyanamid; and glyphosate in its acid form as technical product. For the technical products, a stock solution in a 1:1 water/acetone mixture was prepared and dilutions performed with the same mixture to provide the various rates applied. Glyphosate acid was dissolved at a concentration of 33 mg/ml in 5 mM potassium dihydrogen phosphate (KH₂PO₄), pH 6, and dilutions performed with deionized water to provide the various rates applied. Spray solutions of imazethapyr were made from stock solutions prepared by dilution of the herbicide in water. All treatments received 0.2 ml of a 10% solution of R-ll Spreader-Activator of Wilbur Ellis Company in a total spray volume of 14 ml.

After spraying, pots were returned to the greenhouse. Pots forming the first replicate were placed in one block in order of the treatment list for ease of viewing and the remaining replicates were randomly placed in separate blocks.

After an interval of 14 days, a visual evaluation was performed to estimate herbicidal efficacy as percent control of treated plants compared to untreated check plants. Average percent control was computed for each treatment and is presented in the Table below.

### Example 14: percent control of two species 14 days after herbicide application

| herbicide rate (kg a.e. or a.i./ha) | ABUTH | | PANMI | |
|---|---|---|---|---|
| | unabraded | abraded | unabraded | abraded |
| no herbicide | 0 | 0 | 0 | 12 |

| bentazon | | | | |
|---|---|---|---|---|
| 0.004 | 0 | 5 | 0 | 20 |
| 0.018 | 0 | 0 | 0 | 13 |
| 0.070 | 7 | 10 | 0 | 3 |
| 0.28 | 60 | 77 | 3 | 15 |
| 1.12 | 87 | 100 | 0 | 33 |

| atrazine | | | | |
|---|---|---|---|---|
| 0.002 | 0 | 0 | 0 | 15 |
| 0.009 | 0 | 0 | 0 | 23 |
| 0.036 | 2 | 3 | 3 | 20 |
| 0.140 | 7 | 3 | 3 | 20 |
| 0.56 | 20 | 28 | 0 | 23 |

| bromacil | | | | |
|---|---|---|---|---|
| 0.002 | 0 | 3 | 0 | 17 |
| 0.009 | 0 | 0 | 3 | 12 |
| 0.036 | 12 | 15 | 23 | 22 |
| 0.140 | 43 | 37 | 32 | 37 |
| 0.56 | 77 | 75 | 47 | 50 |

| imazethapyr | | | | |
|---|---|---|---|---|
| 0.00028 | 0 | 0 | 0 | 12 |
| 0.011 | 0 | 7 | 0 | 18 |
| 0.045 | 30 | 40 | 17 | 33 |
| 0.018 | 53 | 63 | 32 | 53 |
| 0.071 | 72 | 83 | 47 | 60 |

| glyphosate | | | | |
|---|---|---|---|---|
| 0.0035 | 7 | 0 | 0 | 12 |
| 0.0140 | 0 | 23 | 3 | 20 |
| 0.056 | 0 | 62 | 0 | 60 |
| 0.22 | 60 | 77 | 62 | 82 |
| 0.89 | 95 | 100 | 97 | 100 |

### Example 15

Seeds of weed species to be treated in this Example illustrative of the invention were planted, one species per pot, in 4-inch (10.1 cm) square pots filled with steam-sterilized Dupo silt loam soil containing a small amount of 18-5-10 NPK fertilizer, and covered with the same soil with no added fertilizer. The pots were placed in a greenhouse with sub-irrigation and overhead irrigation as needed. Seedlings were thinned at cotyledon stage to 2-4 plants per pot. The species used in this study were velvetleaf (Abutilon theophrasti, ABUTH) and wild proso millet (Panicum miliaceum, PANMI).

The herbicide used in this Example was dicamba as its dimethylamine salt in the form of the aqueous concentrate formulation Banvel-D of Sandoz. A stock solution in a 1:1 water/acetone mixture was prepared and dilutions performed with the same mixture to provide the various rates applied. All treatments received 0.2 ml of a 10% solution of R-ll Spreader-Activator of Wilbur Ellis Company in a total spray volume of 14 ml.

Physical injury in these Examples was inflicted on the above-ground portions of the plants by a propelled particulate abrasive, 200-mesh garnet, which has an average particle size of approximately 75 µm. About 1 hour prior to herbicide application, one set of plants was abraded using a hand-held Sears Craftsman™ sandblaster as used in Examples 1-9, driven by compressed air, with nozzle held 20 inches (51 cm) above the plant canopy, operating at approximately 50 lb/sq inch (345 kiloPascals). Depending on the species, 2 or 3 passes were made with the sandblaster moving at about 1 ft/s (30 cm/s), usually delivering 800-1200 lb/acre (896-1344 kg/ha) garnet in total.

Three replications each of unabraded and abraded plants received herbicide treatment by means of a track sprayer fitted with an 8002E nozzle having a 50-mesh screen, 16 inches (41 cm) above the plant canopy. After spraying plants were returned to the greenhouse and received subirrigation but no overhead irrigation. Greenhouse temperatures were set at 85°F (29°C) day, 70°F (21°C) night, with a 14 hour photoperiod. Relative humidity was variable and not controlled, but was generally around 80-90%.

After the interval noted below, treated plants were compared with unabraded and abraded check plants. Abrasion alone and 1:1 water/acetone mixture alone caused occasional leaf crinkling and stature reduction and these types of damage were excluded in percent control evaluations. Average percent control was computed for each treatment and is presented in the Table below.

### Example 15: percent control of two species 8 days after dicamba application

| rate (kg a.e./ha) | ABUTH | | PANMI | |
|---|---|---|---|---|
| | unabraded | abraded | unabraded | abraded |
| 0.002 | 3 | 5 | 2 | 2 |
| 0.0089 | 7 | 10 | 7 | 7 |
| 0.036 | 13 | 25 | 7 | 8 |
| 0.140 | 18 | 43 | 8 | 8 |
| 0.56 | 53 | 95 | 8 | 10 |

### Example 16

The procedure in this Example illustrative of the invention was as described for Example 15, except that the herbicide used was sethoxydim in the form of technical product.

### Example 16: percent control of two species 8 days after sethoxydim application

| rate (kg a.i./ha) | ABUTH | | PANMI | |
|---|---|---|---|---|
| | unabraded | abraded | unabraded | abraded |
| 0.002 | 5 | 5 | 0 | 0 |
| 0.009 | 8 | 13 | 7 | 10 |
| 0.036 | 12 | 22 | 13 | 23 |
| 0.140 | 10 | 28 | 77 | 87 |
| 0.56 | 22 | 45 | 85 | 98 |

### Example 17

The procedure in this Example illustrative of the invention was as described for Example 15, except that the herbicide used was fluometuron in the form of technical product.

### Example 17: percent control of two species 8 days after fluometuron application

| rate (kg a.i./ha) | ABUTH | | PANMI | |
|---|---|---|---|---|
| | unabraded | abraded | unabraded | abraded |
| 0.009 | 0 | 7 | 7 | 7 |
| 0.036 | 2 | 8 | 3 | 3 |
| 0.140 | 3 | 18 | 3 | 3 |
| 0.56 | 7 | 33 | 10 | 20 |
| 1.1 | 10 | 50 | 13 | 37 |

### Example 18

The procedure in this Example illustrative of the invention was as described for Example 15, except that the herbicide used was imazethapyr as its ammonium salt, in the form of the aqueous concentrate formulation Pursuit of American Cyanamid.

### Example 18: percent control of two species 8 days after imazethapyr application

| rate (kg a.e./ha) | ABUTH | | PANMI | |
|---|---|---|---|---|
| | unabraded | abraded | unabraded | abraded |
| 0.00025 | 3 | 5 | 0 | 0 |
| 0.0011 | 13 | 17 | 10 | 13 |
| 0.0045 | 35 | 53 | 28 | 50 |
| 0.018 | 47 | 90 | 63 | 77 |
| 0.071 | 63 | 95 | 82 | 90 |

### Example 19

The procedure in this Example illustrative of the invention was as described for Example 15, except that the herbicide used was picloram as its potassium salt in the form of the aqueous concentrate formulation sold under the name Tordon by DowElanco, and the species used were redroot pigweed (Amaranthus retroflexus, AMARE) and crabgrass (Digitaria sp., DIGSS), which were planted in separate rows within the same pots.

### Example 19: percent control of two species 8 days after picloram application

| rate (kg a.i./ha) | AMARE | | DIGSS | |
|---|---|---|---|---|
| | unabraded | abraded | unabraded | abraded |
| 0.0045 | 13 | 23 | 8 | 22 |
| 0.018 | 27 | 42 | 32 | 31 |
| 0.071 | 60 | 73 | 35 | 40 |
| 0.28 | 83 | 92 | 40 | 58 |
| 0.56 | 92 | 96 | 50 | 65 |

### Example 20

The procedure in this Example illustrative of the invention was as described for Example 19, except that the herbicide used was bromacil in the form of the wettable powder formulation sold under the name of Hyvar-X by DuPont.

### Example 20: percent control of two species 8 days after bromacil application

| rate (kg a.i./ha) | AMARE | | DIGSS | |
|---|---|---|---|---|
| | unabraded | abraded | unabraded | abraded |
| 0.009 | 30 | 40 | 20 | 37 |
| 0.036 | 47 | 58 | 37 | 47 |
| 0.140 | 50 | 63 | 42 | 58 |
| 0.56 | 65 | 95 | 70 | 88 |
| 1.12 | 95 | 97 | 90 | 98 |

### Example 21

The procedure in this Example illustrative of the invention was as described for Example 19, except that the herbicide used was pendimethalin in the form of the emulsifiable concentrate formulation sold under the name of Prowl by American Cyanamid.

### Example 21: percent control of two species 8 days after pendimethalin application

| rate (kg a.i./ha) | AMARE | | DIGSS | |
|---|---|---|---|---|
| | unabraded | abraded | unabraded | abraded |
| 0.018 | 13 | 23 | 13 | 23 |
| 0.071 | 20 | 32 | 17 | 40 |
| 0.28 | 33 | 70 | 30 | 60 |
| 1.12 | 57 | 78 | 57 | 80 |
| 2.24 | 72 | 92 | 72 | 92 |

### Example 22

The procedure in this Example illustrative of the invention was as described for Example 15, except that the herbicide used was norflurazon in the form of technical product, and the species used were prickly sida (Sida spinosa, SIDSP) and large crabgrass (Digitaria sanguinalis, DIGSA), which were planted in separate rows within the same pots.

### Example 22: percent control of two species 8 days after norflurazon application

| rate (kg a.i./ha) | SIDSP | | DIGSA | |
|---|---|---|---|---|
| | unabraded | abraded | unabraded | abraded |
| 0.018 | 13 | 30 | 10 | 30 |
| 0.071 | 17 | 40 | 10 | 35 |
| 0.28 | 27 | 43 | 22 | 45 |
| 1.1 | 37 | 60 | 33 | 60 |
| 2.2 | 40 | 70 | 37 | 73 |

### Example 23

The procedure in this Example illustrative of the invention was as described for Example 15, except that the herbicide used was quizalofop racemic mixture as its ethyl ester in the form of the emulsifiable concentrate formulation sold under the name of Assure by DuPont, and the species used were johnsongrass (Sorghum halepense, SORHA) and giant foxtail (Setaria faberi, SETFA), which were planted in separate rows within the same pots.

### Example 23: percent control of two species 8 days after quizalofop application

| rate (kg a.i./ha) | SORHA | | SETFA | |
|---|---|---|---|---|
| | unabraded | abraded | unabraded | abraded |
| 0.00028 | 3 | 20 | 3 | 20 |
| 0.0011 | 7 | 25 | 7 | 28 |
| 0.0045 | 20 | 37 | 20 | 40 |
| 0.018 | 28 | 57 | 32 | 63 |
| 0.071 | 70 | 85 | 73 | 92 |

### Example 24

The procedure in this Example illustrative of the invention was as described for Example 15, except that the herbicide used was flupoxam in the form of a suspension concentrate formulation, and the species used were redroot pigweed (Amaranthus retroflexus, AMARE) and Indian mustard (Brassica juncea, BRSJU), which were planted in separate rows within the same pots.

### Example 24: percent control of two species 8 days after flupoxam application

| rate (kg a.i./ha) | AMARE | | BRSJU | |
|---|---|---|---|---|
| | unabraded | abraded | unabraded | abraded |
| 0.035 | 7 | 20 | 13 | 30 |
| 0.071 | 20 | 22 | 20 | 40 |
| 0.140 | 20 | 28 | 23 | 47 |
| 0.28 | 20 | 27 | 43 | 63 |
| 0.56 | 23 | 43 | 48 | 77 |

### Example 25

The procedure in this Example illustrative of the invention was as described for Example 15, except that the herbicide used was isoxaben in the form of technical product, and the species used were redroot pigweed (Amaranthus retroflexus, AMARE) and giant foxtail (Setaria faberi, SETFA), which were planted in separate rows within the same pots.

### Example 25: percent control of two species 8 days after isoxaben application

| rate (kg a.i./ha) | AMARE | | SETFA | |
|---|---|---|---|---|
| | unabraded | abraded | unabraded | abraded |
| 0.009 | 0 | 17 | 0 | 17 |
| 0.036 | 3 | 17 | 3 | 35 |
| 0.140 | 7 | 13 | 17 | 37 |
| 0.56 | 13 | 43 | 13 | 50 |
| 1.1 | 17 | 47 | 17 | 60 |

### Example 26

The procedure in this Example illustrative of the invention was as described for Example 15, except that the herbicide used was fosamine as its ammonium salt in the form of technical material.

### Example 26: percent control of two species 7 days after fosamine-ammonium application

| rate (kg a.i./ha) | ABUTH | | PANMI | |
|---|---|---|---|---|
| | unabraded | abraded | unabraded | abraded |
| 0.0018 | 0 | 2 | 0 | 7 |
| 0.0071 | 0 | 8 | 3 | 15 |
| 0.028 | 7 | 18 | 3 | 17 |
| 0.11 | 3 | 37 | 3 | 20 |
| 0.45 | 15 | 43 | 3 | 22 |

### Example 27

The procedure in this Example illustrative of the invention was as described for Examples 1-9, except that the following herbicides were used: halosulfuron in the form of the water-dispersible granular formulation Permit of Monsanto Company; imazethapyr as its ammonium salt, in the form of the aqueous concentrate formulation sold under the name of Pursuit by American Cyanamid; 2,4-D as its dimethylamine salt, in the form of an aqueous concentrate formulation; glufosinate as its ammonium salt, in the form of the aqueous concentrate formulation sold under the name of Basta by AgrEvo; and glyphosate as its isopropylamine salt, in the form of the aqueous concentrate formulation MON 2139 of Monsanto Company. Rain treatments were applied only in the case of glyphosate. The species used in this study was velvetleaf (Abutilon theophrasti, ABUTH) and evaluation of percent control was conducted 10 days after herbicide application.

### Example 27: percent control of ABUTH 10 days after herbicide application

| herbicide rate (kg a.e. or a.i./ha) | no rain | | rain | |
|---|---|---|---|---|
| | unabraded | abraded | unabraded | abraded |
| no herbicide | 0 | 0 | | |

| halosulfuron | | | | |
|---|---|---|---|---|
| 0.004 | 70 | 83 | | |
| 0.009 | 75 | 94 | | |
| 0.018 | 78 | 100 | | |
| 0.036 | 79 | 99 | | |
| 0.072 | 80 | 99 | | |

| imazethapyr | | | | |
|---|---|---|---|---|
| 0.009 | 55 | 82 | | |
| 0.018 | 60 | 77 | | |
| 0.036 | 65 | 87 | | |
| 0.072 | 70 | 87 | | |
| 0.140 | 77 | 95 | | |

| 2, 4-D | | | | |
|---|---|---|---|---|
| 0.072 | 0 | 53 | | |
| 0.14 | 48 | 73 | | |
| 0.28 | 70 | 77 | | |
| 0.56 | 80 | 80 | | |
| 1.1 | 80 | 85 | | |

| glufosinate | | | | |
|---|---|---|---|---|
| 0.056 | 0 | 83 | | |
| 0.11 | 0 | 80 | | |
| 0.22 | 10 | 90 | | |
| 0.45 | 83 | 100 | | |
| 0.89 | 74 | 100 | | |

| glyphosate | | | | |
|---|---|---|---|---|
| 0.056 | 0 | 70 | 0 | 65 |
| 0.11 | 53 | 74 | 0 | 74 |
| 0.22 | 70 | 84 | 0 | 82 |
| 0.45 | 83 | 99 | 0 | 89 |
| 0.89 | 85 | 100 | 65 | 85 |

### Example 28

The procedure in this Example illustrative of the invention was as described for Example 15, except that the herbicide used was halosulfuron in the form of technical product.

### Example 28: percent control of two species 11 days after halosulfuron application

| rate (kg a.i./ha) | PANMI | | ABUTH | |
|---|---|---|---|---|
| | unabraded | abraded | unabraded | abraded |
| 0.001 | 0 | 12 | 27 | 63 |
| 0.004 | 3 | 3 | 92 | 93 |
| 0.018 | 8 | 15 | 95 | 99 |
| 0.071 | 7 | 8 | 99 | 99 |

### Example 29

The procedure in this Example illustrative of the invention was as described for Example 15, except that the herbicide used was chlorsulfuron in the form of technical product.

### Example 29: percent control of two species 11 days after chlorsulfuron application

| rate (kg a.i./ha) | PANMI | | ABUTH | |
|---|---|---|---|---|
| | unabraded | abraded | unabraded | abraded |
| 0.001 | 15 | 7 | 67 | 93 |
| 0.004 | 3 | 3 | 93 | 96 |
| 0.018 | 20 | 3 | 95 | 99 |
| 0.071 | 17 | 20 | 98 | 99 |

### Example 30

The procedure in this Example illustrative of the invention was as described for Example 15, except that the herbicide used was chlorimuron in the form of technical product.

### Example 30: percent control of two species 11 days after chlorimuron application

| rate (kg a.i./ha) | PANMI | | ABUTH | |
|---|---|---|---|---|
| | unabraded | abraded | unabraded | abraded |
| 0.001 | 5 | 27 | 27 | 80 |
| 0.004 | 20 | 7 | 87 | 95 |
| 0.018 | 10 | 13 | 93 | 99 |
| 0.071 | 7 | 20 | 96 | 99 |

### Example 31

The procedure in this Example illustrative of the invention was as described for Example 15, except that the herbicide used was oxyfluorfen in the form of technical product, and the study was conducted only on velvetleaf (Abutilon theophrasti, ABUTH).

### Example 31: percent control of ABUTH 11 days after oxyfluorfen application

| rate (kg a.i./ha) | unabraded | abraded |
|---|---|---|
| 0.008 | 8 | 20 |
| 0.034 | 22 | 25 |
| 0.140 | 47 | 52 |
| 0.56 | 60 | 58 |

### Example 32

The procedure in this Example illustrative of the invention was as described for Example 15, except that the herbicide used was oxyfluorfen in the form of technical product.

### Example 32: percent control of two species 10 days after oxyfluorfen application

| rate (kg a.i./ha) | PANMI | | ABUTH | |
|---|---|---|---|---|
| | unabraded | abraded | unabraded | abraded |
| 0.002 | 15 | 20 | 53 | 48 |
| 0.004 | 12 | 17 | 55 | 60 |
| 0.0001 | 20 | 32 | 65 | 70 |
| 0.018 | 35 | 45 | 72 | 78 |
| 0.036 | 55 | 78 | 93 | 85 |

### Example 33

The procedure in this Example illustrative of the invention was as described for Example 15, except that the herbicide used was acifluorfen acid as technical product.

### Example 33: percent control of two species 10 days after acifluorfen application

| rate (kg a.e./ha) | PANMI | | ABUTH | |
|---|---|---|---|---|
| | unabraded | abraded | unabraded | abraded |
| 0.002 | 5 | 22 | 17 | 28 |
| 0.004 | 5 | 17 | 13 | 42 |
| 0.009 | 5 | 22 | 20 | 50 |
| 0.018 | 10 | 18 | 22 | 65 |
| 0.036 | 15 | 32 | 38 | 98 |

### Example 34

The procedure in this Example illustrative of the invention was as described for Example 15, except that the herbicide used was fomesafen as its sodium salt in the form of the aqueous concentrate formulation Reflex of Zeneca.

### Example 34: percent control of two species 10 days after fomesafen-sodium application

| rate (kg a.i./ha) | PANMI | | ABUTH | |
|---|---|---|---|---|
| | unabraded | abraded | unabraded | abraded |
| 0.002 | 8 | 13 | 12 | 33 |
| 0.004 | 5 | 17 | 13 | 37 |
| 0.009 | 5 | 20 | 15 | 55 |
| 0.018 | 5 | 22 | 27 | 55 |
| 0.036 | 10 | 38 | 62 | 73 |

### Example 35

The procedure in this Example illustrative of the invention was as described for Example 15, except that the herbicide used was halosulfuron in the form of technical product, and the only weed species included in the study was velvetleaf (Abutilon theophrasti, ABUTH).

### Example 35: percent control of ABUTH 16 days after halosulfuron application

| rate (kg a.i./ha) | unabraded | abraded |
|---|---|---|
| 0.0006 | 27 | 57 |
| 0.001 | 73 | 80 |
| 0.002 | 77 | 96 |
| 0.004 | 88 | 98 |
| 0.009 | 92 | 99 |

### Example 36

The procedure in this Example illustrative of the invention was as described for Example 15, except that the herbicide used was chlorimuron in the form of technical product, and the only weed species included in the study was velvetleaf (Abutilon theophrasti, ABUTH).

### Example 36: percent control of ABUTH 16 days after chlorimuron application

| rate (kg a.i./ha) | unabraded | abraded |
|---|---|---|
| 0.0006 | 55 | 63 |
| 0.001 | 60 | 73 |
| 0.002 | 80 | 92 |
| 0.004 | 90 | 86 |
| 0.009 | 94 | 98 |

### Example 37

The procedure in this Example illustrative of the invention was as described for Example 15, except that the herbicide used was triallate in the form of technical product, and the only weed species included in the study was wild oat (Avena fatua, AVEFA).

### Example 37: percent control of AVEFA 16 days after triallate application

| rate (kg a.i./ha) | unabraded | abraded |
|---|---|---|
| 0.14 | 77 | 83 |
| 0.28 | 93 | 88 |
| 0.56 | 95 | 95 |
| 1.1 | 93 | 95 |
| 2.2 | 93 | 93 |

### Example 38

The procedure in this Example illustrative of the invention was as described for Example 15, except that the herbicide used was bromacil acid in the form of technical product.

### Example 38: percent control of two species 14 days after bromacil application

| rate (kg a.i./ha) | PANMI | | ABUTH | |
|---|---|---|---|---|
| | unabraded | abraded | unabraded | abraded |
| 0.071 | 35 | 90 | 67 | 80 |
| 0.140 | 35 | 83 | 78 | 90 |
| 0.28 | 40 | 83 | 90 | 96 |
| 0.56 | 63 | 95 | 93 | 92 |
| 1.1 | 92 | 98 | 99 | 96 |

### Example 39

The procedure in this Example illustrative of the invention was as described for Example 15, except that the herbicide used was bentazon acid in the form of technical product.

### Example 39: percent control of two species 14 days after bentazon application

| rate (kg a.i./ha) | PANMI | | ABUTH | |
|---|---|---|---|---|
| | unabraded | abraded | unabraded | abraded |
| 0.071 | 2 | 7 | 25 | 60 |
| 0.140 | 2 | 22 | 53 | 90 |
| 0.28 | 0 | 0 | 78 | 96 |
| 0.56 | 0 | 0 | 100 | 99 |
| 1.1 | 0 | 17 | 97 | 100 |

### Example 40

The procedure in this Example illustrative of the invention was as described for Example 15, except that the herbicide used was atrazine in the form of technical product.

### Example 40: percent control of two species 10 days after atrazine application

| rate (kg a.i./ha) | PANMI | | ABUTH | |
|---|---|---|---|---|
| | unabraded | abraded | unabraded | abraded |
| 0.140 | 0 | 15 | 52 | 53 |
| 0.28 | 7 | 0 | 53 | 72 |
| 0.56 | 7 | 32 | 72 | 85 |
| 1.1 | 10 | 17 | 87 | 77 |
| 2.2 | 0 | 42 | 82 | 98 |

### Example 41

The procedure in this Example illustrative of the invention was as described for Example 15, except that the herbicide used was metribuzin in the form of technical product.

### Example 41: percent control of two species 10 days after metribuzin application

| rate (kg a.i./ha) | PANMI | | ABUTH | |
|---|---|---|---|---|
| | unabraded | abraded | unabraded | abraded |
| 0.009 | 0 | 23 | 48 | 67 |
| 0.018 | 7 | 52 | 55 | 73 |
| 0.036 | 13 | 63 | 79 | 82 |
| 0.071 | 35 | 47 | 98 | 96 |
| 0.140 | 63 | 96 | 97 | 97 |

### Example 42

In this Example illustrative of the invention, abrasion by means of propelled abrasive particles was tested for enhancement of performance of the gametocide clofencet. Wheat cv. Anza plants were grown from seed in pots containing a growing medium of Metromix 350 containing a slow release fertilizer, in a growth chamber with temperature settings of 20°C day, 18°C night, a 14 h photoperiod and light intensity of 600 µEinsteins during the day. Plants were grown for 40 days before treatment.

Plants were either unabraded or abraded using a Sears Craftsman™ hand-held sandblaster according to the method described for Examples 1-9 except that the nozzle was held 8-10 inches (20.3-25.4 cm) above the plant canopy, passing over three 6-inch (15.2-cm) diameter round pots, four times in a serpentine manner. A calculated dose of clofencet as technical product was then applied by micropipette to the plants in each pot, in 25 µl of water containing 5% weight/volume glycerol and 0.25% weight/volume Tween 20 surfactant. Four replications of each treatment were performed.

The number of seeds set per tiller was counted 2 weeks after anthesis. Reduction in seed set by comparison with untreated check plants was used as an indication of male sterility induced by the gametocide.

### Example 42: number of seeds set per tiller following application of clofencet

| gametocide rate (µg/tiller) | unabraded | abraded |
|---|---|---|
| 0 | 36.9 | 39.0 |
| 10 | 37.0 | 40.7 |
| 20 | 40.5 | 36.3 |
| 50 | 33.5 | 27.0 |
| 100 | 26.0 | 0.3 |
| 200 | 0.5 | 0.3 |

### Example 43

In this Example illustrative of the invention, abrasion by means of propelled abrasive particles was tested for enhancement of performance of the insecticides methamidophos and methomyl. Tobacco cv Samsun plants were grown from seed in 2-inch (5.1 cm) square pots containing Metromix 350. After seedling emergence, seedlings were thinned to 1 plant per pot and maintained in a growth chamber at constant 21°C temperature and 50% relative humidity with a 16 h photoperiod and light intensity of 500 µEinsteins during the light period. Plants were used for the experimental treatments of this Example at the 5-6 leaf stage, 12 weeks after planting.

Tobacco budworm (Heliothis virescens) eggs were purchased from USDA-ARS Southern Field Crop Insect Management Laboratory, Stoneville, Mississippi. Insects were reared from the egg for 4 days at 27°C on southern corn rootworm diet as described by Marrone, P.G., Ferri, F.D., Mosely, T.R. and Meinke, L.J. in "Improvements in laboratory rearing of the southern corn rootworm, Diabrotica undecimpuncta howardi Barber (Coleoptera: Chrysomelidae), on an artificial diet and corn", published in 1985 in Journal of Economic Entomology Volume 78, pages 290-293. Four cages were clipped on to each tobacco plant 24 hours after insecticide treatment. Two second instar larvae were transferred to each cage using a camel hair brush. The clip-on cages were similar to those described by Eenil, A.H. et al. in Euphytica Volume 33, page 825, published in 1984. The cages were 1 or 1.5 cm in diameter and were 1 cm deep with one end enclosed with nylon chiffon. The lid and body of each cage were attached to opposing arms of a common hair clip so that the cage could be sandwiched on to a leaf.

Tobacco plants were unabraded, or abraded using a Sears Craftsman™ hand-held sandblaster according to the method described for Examples 1-9. Two passes of the sandblaster were required to treat all of the plant foliage.

Insecticide was applied as technical product in water at a spray volume of 20 gallons/acre (187 liters/hectare) containing 0.5% weight/volume Tween 20, using a standard track sprayer. Simulated rain, 0.125 inch (0.32 cm), was applied 15 minutes after insecticide application by multiple passes with an automatic overhead irrigation system.

Treated tobacco plants were moved to and maintained in a growth chamber with temperature settings of 29.4°C day, 25.6°C night, constant 60% relative humidity and a 12 h photoperiod with light intensity of 562 µEinsteins. Mortality of larvae was recorded 3 days after treatment and the average of 2 replications of each treatment computed.

### Example 43: percent mortality of tobacco budworm larvae 3 days after insecticide treatment of tobacco plants followed by "rain"

| insecticide rate (kg a.i./ha) | unabraded | abraded |
|---|---|---|
| methamidophos | | |
| 0.20 | 17 | 58 |
| 0.40 | 46 | 92 |
| 0.67 | 42 | 93 |

| methomyl | | |
|---|---|---|
| 0.071 | 10 | 17 |
| 0.140 | 39 | 44 |
| 0.42 | 34 | 79 |

### Example 44

In this Example illustrative of the invention, abrasion by means of propelled abrasive particles was tested for enhancement of performance of the nematicide oxamyl. Tomato (cv. Rutgers) plants were greenhouse grown from seed in 3-inch (7.6 cm) square pots containing a sterile mix of 75% sand and 25% Metromix 200. Greenhouse temperature was maintained at 25°C. Plants received abrasion and oxamyl treatments 3 weeks after planting.

Tomato plants were unabraded, or abraded using a Sears Craftsman™ hand-held sandblaster according to the method described for Examples 1-9. Three passes of the sandblaster were required to treat all of the plant foliage.

On the same day, oxamyl was applied in the form of the aqueous concentrate formulation Vydate of DuPont, diluted as appropriate in water containing 0.5% weight/volume Tween 20, and sprayed to wet using a hand sprayer. Prior to spraying, the soil surface in the pots was covered with fine vermiculite to prevent soil contamination. The vermiculite was dumped off the pots as soon as the spray had dried on the tomato leaves.

Nematode (Meloidigyne incognita) eggs were harvested from diseased tomato roots 2 days before inoculation. Plants were inoculated 1 day after oxamyl treatment by pipetting 8000 viable eggs on to the soil surface in each pot. Plants then were transferred to a growth chamber at 25°C. Severity of nematode galling was recorded 21 days after inoculation and the average for all replications of each treatment computed.

### Example 44: percent root galling 21 days after inoculation

| oxamyl rate (g a.i./liter) | unabraded | abraded |
|---|---|---|
| 0 | 42 | 33 |
| 0.25 | 42 | 28 |
| 0.5 | 37 | 23 |
| 1.0 | 33 | 25 |
| 2.0 | 33 | 20 |
| 4.0 | 28 | 15 |

### Example 45

In this Example illustrative of the invention, velvetleaf (Abutilon theophrasti, ABUTH) seeds were planted in 4-inch (10.1 cm) square pots filled with 100% silt loam to which 35 g/cu ft (1.25 kg/m³) IBDU fertilizer were added, and the seeds were covered with a mix of 50% Rediearth plus 50% silt loam without added fertilizer. The pots were placed in a greenhouse with sub-irrigation, and emerging seedlings were thinned to 2 plants per pot. Greenhouse temperature settings were 85°F (29°C) day, 70°F (21°C) night, with a 14-14.5 h photoperiod. The same settings were maintained before and after treatment.

Physical injury in this Example was inflicted on the above-ground portions of the plants, 14 days after planting, by a propelled particulate abrasive, 200-mesh garnet, which has an average particle size of approximately 75 µm. This was applied using a sandblaster mounted on a track, capable of varying feed rates, air pressure, nozzle height and track speed. For this Example, air pressure was maintained at 40 lb/sq inch (276 kiloPascals), the nozzle was set 16 inches (40.6 cm) above the plant canopy, track speed was under 1 mile/hr (1.61 km/hr) and one pass was made with the sandblaster. Three feed rates were used, giving garnet deposition rates equivalent to 28, 143 and 256 lb/acre (31, 160 and 287 kg/ha). Some plants received no abrasion.

Plants were then assigned to different herbicide treatments in a factorial experimental design with 2 replications. All plants for each herbicide treatment were sprayed at the same time using a track sprayer calibrated to deliver 20 gallons/acre (187 liters/hectare) water with an 8002E nozzle having a 50-mesh screen, 16 inches (41 cm) above the plant canopy. In these Examples the herbicide used was glyphosate as its isopropylamine salt, in the form of the aqueous concentrate formulation MON 2139 of Monsanto Company. Spray solutions were made from stock solutions prepared by dilution of MON 2139 in water.

After 13 days, visual evaluation was performed to estimate herbicidal efficacy as percent control of treated plants compared to untreated check plants. Average percent control was computed for each treatment.

### Example 45: percent control of ABUTH 13 days after glyphosate application

| glyphosate rate (kg a.e./ha) | garnet rate (lb a.e./acre) | | | |
|---|---|---|---|---|
| | 0 | 28 | 143 | 256 |
| 0 | 0 | 3 | | |
| 0.11 | 10 | 38 | 38 | 38 |
| 0.45 | 100 | | | |

### Example 46

In this Example illustrative of the invention, common lambsquarter (Chenopodium album, CHEAL) seeds were planted in 4-inch (10.1-cm) square pots filled with a soil mix consisting of 50% Metromix 350 plus 50% silt loam to which 100 g/cu ft (3.57 kg/m³) Osmocote fertilizer were added, and the seeds were covered with the same soil mix without added fertilizer. The pots were placed in a greenhouse with sub-irrigation, and emerging seedlings were thinned to 2 plants per pot. Greenhouse temperature settings were 85°F (29°C) day, 70°F (21°C) night, with a 14-14.5 h photoperiod. The same settings were maintained before and after treatment.

Physical injury in this Example was inflicted on the above-ground portions of the plants, approximately 2 weeks after planting, by various propelled particulate abrasives. This was applied using the same sandblaster as used in Example 47. For this Example, air pressure was maintained at 40 lb/sq inch (276 kiloPascals), the nozzle was set 16 inches (41 cm) above the plant canopy, track speed was under 1 mile/hour (1.6 km/hr) and one pass was made with the sandblaster. Two feed rates were used, which in the case of 200-mesh garnet were calculated to give deposition rates of the abrasive equivalent to 143 and 256 lb/acre (160 and 287 kg/ha). Some plants received no abrasion.

Materials used as abrasive agents in this study were:
garnet, 200-mesh as used in Example 47
glass cullet, 1040 supplied by Universal
glass cullet, 1035 supplied by Universal
aluminum oxide type B, 120-mesh
white silica sand, 1.0 profile size, supplied by Unimin
glass beads, 140-270 mesh
Scott's Lawn & Garden fertilizer granules ground to a fine powder using a Retsch 2M-1 mill

Plants were then assigned to different herbicide treatments in a factorial experimental design with 2 replications. All plants for each herbicide treatment were sprayed at the same time using a track sprayer calibrated to deliver 20 gallons/acre (187 liters/hectare) water with an 8002E nozzle having a 50-mesh screen, 16 inches (41 cm) above the plant canopy. In these Examples the herbicide used was glyphosate as its isopropylamine salt, in the form of the aqueous concentrate formulation MON 2139 of Monsanto Company. Spray solutions were made from stock solutions prepared by dilution of MON 2139 in water.

After an interval of 12 days, a visual evaluation was performed to estimate herbicidal efficacy as percent control of treated plants compared to untreated check plants. Average percent control was computed for each treatment and is presented in the Table below.

### Example 46: percent control of CHEAL 12 days after glyphosate application

| glyphosate rate (kg a.e./ha) | abrasive material | abrasive rate* (kg/ha) | | |
|---|---|---|---|---|
| | | 0 | 143 | 256 |
| 0 | none | 0 | | |
| 0.11 | none | 13 | | |
| 0.45 | none | 62 | | |
| 0.11 | garnet, 200-mesh | | 52 | 37 |
| 0.11 | glass cullet, 1040 | | 38 | 20 |
| 0.11 | glass cullet, 1035 | | 28 | 48 |
| 0.11 | aluminum oxide | | 46 | 50 |
| 0.11 | white silica sand | | 38 | 50 |
| 0.11 | glass beads | | 62 | 43 |
| 0.11 | fertilizer | | 25 | 34 |

| | | | | |
|---|---|---|---|---|
| *calculated based on garnet, 200-mesh | | | | |

### Example 48

In this Example illustrative of the invention, velvetleaf (Abutilon theophrasti, ABUTH) seeds were planted in 4-inch (10.1-cm) square pots filled with 100% silt loam to which 35 g/cu ft (1.25 kg/m³) IBDU fertilizer were added, and the seeds were covered with a mix of 50% Rediearth plus 50% silt loam without added fertilizer. The pots were placed in a greenhouse with sub-irrigation, and emerging seedlings were thinned to 2 plants per pot. Greenhouse temperature settings were 85°F (29°C) day, 70°F (21°C) night, with a 14-14.5 h photoperiod. The same settings were maintained before and after treatment.

Physical injury in this Example was inflicted on the above-ground portions of the plants, 14 days after planting, by means of one pass of a high-pressure water jet delivered from a single "0-degree" nozzle with a 0.004 inch (0.01 cm) orifice, moving at 3.5 miles/hour (5.7 km/hr) and at a pressure of 1000 or 3000 lb/sq inch (6890 or 20670 kiloPascals). The nozzle was obtained from Aurele M. Gatti, Inc. of Trenton, New Jersey. Injury was observed to take the form of a small cut in the tissue, with macerated or otherwise damaged leaf tissue sometimes occurring at one or both ends of the cut. The plants and water jet equipment were set up to target a single such cut on the second true leaf, near the petiole end, sometimes crossing the midvein.

A single 6 µL drop containing a calculated dose of glyphosate as its isopropylamine salt, in the form of the aqueous concentrate formulation MON 2139 of Monsanto Company, was placed on the cut or on the macerated tissue adjacent to the cut, on each plant which had received the high-pressure water jet treatment. Similar applications of glyphosate were made to plants which had not had the high-pressure water jet treatment, but in these cases the application was never made on the midvein. Dose calculations were based on each plant getting one-twelfth of the amount of glyphosate deposited on 0.5 sq feet (465 cm²). Four replications were made of each treatment.

This study was conducted away from the laboratory; therefore, immediately after treatment, the plants were transported back to the greenhouse by van.
Approximately 8 hours after treatment, the plants were replaced in the greenhouse and given subirrigation. Pots forming the first replicate were placed in one block in order of the treatment list for ease of viewing and the remaining replicates were randomly placed in separate blocks.

After an interval of 13 days, a visual evaluation was performed to estimate herbicidal efficacy as percent control of treated plants compared to untreated check plants. Average percent control was computed for each treatment and is presented in the Table below.

### Example 48: percent control of ABUTH 13 days after glyphosate application

| glyphosate rate (kg a.e./ha) | no water jet | water jet pressure (kiloPascals) | |
|---|---|---|---|
| | | 6890 | 20670 |
| 0 | 0 | 0 | 0 |
| 0.028 | 68 | 80 | 77 |
| 0.06 | 82 | 84 | 85 |
| 0.11 | 89 | 94 | 99 |
| 0.22 | 94 | 98 | 96 |
| 0.45 | 100 | | |

### Example 49

In this Example illustrative of the invention, velvetleaf (Abutilon theophrasti, ABUTH) seeds were planted in 4-inch (10.1-cm) square pots filled with 100% silt loam to which 35 g/cu ft (1.25 kg/m³) IBDU fertilzer were added, and the seeds were covered with 50% Rediearth plus 50% silt loam without fertilizer. The pots were placed in a greenhouse with sub-irrigation, and emerging seedlings were thinned to 2 plants per pot. Greenhouse temperature settings were 85°F (29°C) day, 70°F (21°C) night, with a 14-14.5 h photoperiod. The same settings were maintained before and after treatment.

Physical injury in this Example was inflicted on the above-ground portions of the plants, two weeks after planting, by means of 15-30 particles of dry ice (carbon dioxide in its solid phase) propelled on to each plant using a 1 oz (28.3 ml) French square bottle having two 3 mm holes in the lid, with vigorous shaking of the bottle 8-12 inches (20-30 cm) above the plant canopy. The dry ice was observed to sublime completely in 2-15 seconds on the leaf surface.

After dry ice treatment, plants were sprayed with glyphosate as its isopropylamine salt, in the form of the aqueous concentrate formulation MON 2139 of Monsanto Company. Plants with and without the dry ice treatment were sprayed at the same time using a track sprayer calibrated to deliver 20 gallons/acre (187 liters/ha) water with an 8002E nozzle having a 50-mesh screen, 16 inches (41 cm) above the plant canopy. Each treatment was replicated three times. Similar glyphosate treatments were applied to plants which had not received dry ice. Plants were returned to the greenhouse after spraying.

After an interval of 11 days, a visual evaluation was performed to estimate herbicidal efficacy as percent control of treated plants compared to untreated check plants. Average percent control was computed for each treatment and is presented in the Table below.

### Example 49: percent control of ABUTH 5 and 11 days after glyphosate application (DAT)

| glyphosate rate (kg a.i./ha) | not treated with dry ice | | treated with dry ice | |
|---|---|---|---|---|
| | 5 DAT | 11 DAT | 5 DAT | 11 DAT |
| 0 | 0 | 0 | 0 | 0 |
| 0.014 | 0 | 0 | 0 | 0 |
| 0.028 | 0 | 0 | 0 | 0 |
| 0.056 | 0 | 0 | 0 | 2 |
| 0.11 | 8 | 0 | 22 | 8 |
| 0.21 | 60 | 73 | 71 | 83 |
| 0.45 | 80 | 100 | 89 | 100 |
| 0.89 | 97 | 100 | 93 | 100 |

### Example 50

In this Example illustrative of the invention, velvetleaf (Abutilon theophrasti, ABUTH) seeds were planted in 4-inch (10.1-cm) square pots filled with a soil mix consisting of 50% Metromix 350 plus 50% silt loam soil to which 100 g/cu ft (3.57 kg/m³) Osmocote fertilizer were added, and the seeds were covered with the same soil mix without added fertilizer. The pots were placed in a greenhouse with sub-irrigation, and emerging seedlings were thinned to 2 plants per pot. Greenhouse temperature settings were 85°F (29°C) day, 70°F (21°C) night, with a 14-14.5 h photoperiod. The same settings were maintained before and after treatment.

Physical injury in this Example was inflicted on the above-ground portions of the plants, 17 days after planting, by a propelled chemical corrosive, a 2.5% weight/weight aqueous potassium hydroxide (KOH) solution. This solution was applied using a track sprayer calibrated to deliver 20 gallons/acre (187 liters/ha) with an 8002E nozzle having a 50-mesh screen, 16 inches (41 cm) above the plant canopy. Plants were allowed to dry for 1 hour after KOH treatment. Other plants received injury by abrasion using a hand-held Sears Craftsman™ sandblaster as described in Examples 1-9. A third set of plants received no abrasion or corrosion with KOH.

Plants were then assigned to different herbicide treatments in a factorial experimental design with 3 replications. All plants for each herbicide treatment were sprayed at the same time using a track sprayer calibrated to deliver 20 gallons/acre (187 liters/ha) water with an 8002E nozzle having a 50-mesh screen, 16 inches (41 cm) above the plant canopy. In these Examples the herbicide used was glyphosate as its isopropylamine salt, in the form of the aqueous concentrate formulation MON 2139 of Monsanto Company. Spray solutions were made from stock solutions prepared by dilution of MON 2139 in water.

After an interval of 11 days, a visual evaluation was performed to estimate herbicidal efficacy as percent control of treated plants compared to untreated check plants. Average percent control was computed for each treatment and is presented in the Table below.

### Example 50: percent control of ABUTH 11 days after glyphosate application

| glyphosate rate (kg a.e./ha) | no physical injury | injury by abrasion | injury by corrosion |
|---|---|---|---|
| 0 | 0 | 0 | 0 |
| 0.0140 | 0 | 30 | 7 |
| 0.028 | 0 | 70 | 13 |
| 0.056 | 3 | 75 | 48 |
| 0.11 | 0 | 83 | 73 |
| 0.22 | 81 | 96 | 85 |
| 0.45 | 87 | 99 | 91 |
| 0.89 | 100 | | |

### Example 51

In this Example illustrative of the invention, a field experiment was conducted in the Australian Capital Territory on 5-10 cm high vegetation consisting primarily of white flatweed (Hypochoeris microcephala, HRYMI) at the rosette stage of growth and silvergrass (Vulpia sp., VLPSS) at the 1-3 tiller stage. Plots were established, 2 m wide and 10 m long, with 3 replications of each treatment.

Plots received either no physical injury, or one of two injury treatments, a prior art method described herein as "bruising" and a method of the present invention described herein as "blasting". Bruising involved driving a 2 metric ton four-wheel drive vehicle fitted with rubber tires, twice over the plot in opposite directions. For blasting, a hand-held sandblaster was used having a container of capacity 1000 cm³ slung under the gun body. The sandblaster was made of die-cast aluminum alloy and equipped with a 6 mm nozzle. The operating pressure was 95 lb/sq inch (655 kPa). The abrasive used was a commercial product consisting of fine glass particles.

Within an hour after bruising or blasting, plots received an application of glyphosate as its isopropylamine salt in the form of the aqueous concentrate formulation sold in Australia as Roundup® herbicide, diluted appropriately in water. Application was made using a hand-held boom sprayer fitted with 11001 nozzles, operating at 250 kPa pressure and delivering 90 liters/ha spray volume.

After an interval of 14 days, a visual evaluation was performed to estimate herbicidal efficacy as percent control of plants in treated plots compared to untreated check plots. Average percent control was computed for each treatment and is presented in the Table below.

### Example 51: percent control of two species 14 days after glyphosate application

| glyphosate rate (kg a.e./ha) | injury treatment | HRYMI | VLPSS |
|---|---|---|---|
| 0.18 | none | 62 | 65 |
| 0.25 | none | 78 | 85 |
| 0.36 | none | 92 | 95 |
| 0.18 | bruising | 77 | 78 |
| 0.25 | bruising | 80 | 83 |
| 0.36 | bruising | 93 | 83 |
| 0.18 | blasting | 77 | 77 |
| 0.25 | blasting | 100 | 82 |
| 0.36 | blasting | 100 | 98 |

## Claims

1. A method for delivering an effective amount of an exogenous chemical substance to non-woody living tissue of a plant, comprising the steps, simultaneously or in either order, of:
(a) causing an effective degree of local physical injury, involving death or significant damage to individual cells in said tissue at one or more sites therein or thereon, by means of material propelled from a device; and
(b) applying said exogenous chemical substance to the plant at or close to at least one of the sites of said injury;
wherein step (b) is accomplished within an efficacious time period of step (a) and wherein said injury per se does not result in substantial removal of biomass from the plant or exacerbate any condition of the plant sought to be remedied by said exogenous chemical substance with the proviso that if the material propelled from the device is a blasting material, step (a) precedes step (b).

2. A method according to claim 1 wherein step (a) and step (b) are simultaneous and the material propelled from the device is a composition comprising a solid particulate abrasive substance and said exogenous chemical substance.

3. A method according to claim 1 wherein step (a) and step (b) are simultaneous and the material propelled from the device is a composition comprising a corrosive substance and said exogenous chemical substance.

4. A method according to any of Claims 1 to 3 wherein said injury is caused at a plurality of sites in or on said tissue.

5. A method according to any of Claims 1 to 3 wherein said injury per se is temporary.

6. A method according to any of Claims 1 to 3 wherein said device does not directly contact the plant.

7. A method according to any of Claims 1 to 3 wherein said device contacts the plant but does not itself cause said injury.

8. A method according to any of Claims 1 to 3 further comprising a prior step of cutting, pruning, mowing or otherwise removing biomass from the plant.

9. A method according to Claim 1 wherein step (b) is accomplished not earlier than about 5 days before step (a) and not later than about 5 days after step (a).

10. A method according to Claim 9 wherein step (b) is accomplished not earlier than about 2 days before (a).

11. A method according to Claim 10 wherein steps (a) and (b) are accomplished almost simultaneously.

12. A method according to Claim 2 wherein the exogenous chemical substance is itself particulate and abrasive and substantially forms said solid particulate abrasive substance.

13. A method according to Claim 1 or Claim 2 wherein the particles are ejected from the propelling device in a gaseous medium.

14. A method according to Claim 13 wherein the gaseous medium is air.

15. A method according to Claim 1 or Claim 2 wherein the particles are ejected from the propelling device in a liquid medium.

16. A method according to Claim 15 wherein the liquid medium comprises primarily water.

17. A method according to Claim 1 or Claim 2 wherein the solid abrasive substance is selected from the group consisting of minerals, silicious and calcareous life forms, resins, glasses, microcapsules, coated and uncoated crystals, plant-derived materials (for example ground walnut shells), mixtures thereof and the like.

18. A method according to Claim 17 wherein the solid abrasive substance is a mineral selected from the group consisting of clays, silica, quartz, garnet, alumina, barites, carborundum, metal oxides, carbonates, sulfates and phosphates, mixtures thereof and the like.

19. A method according to Claim 1 or Claim 2 wherein the solid abrasive substance is applied at a rate of from about 0.1 to about 1000 pounds per acre (1121 kg/ha).

20. A method according to Claim 19 wherein the solid abrasive substance is applied at a rate of from about 1 to about 600 pounds per acre (1.1 to about 672 kg/ha).

21. A method according to Claim 20 wherein the solid abrasive substance is applied at a rate of from about 25 to about 300 pounds per acre (28 to about 336 kg/ha).

22. A method according to Claim 1 or Claim 2 wherein the solid abrasive particles have a size in the range from about 10 µm to about 5 mm.

23. A method according to Claim 1 wherein the propelled material is fluid and is ejected from the device with sufficient energy and power to cause said injury.

24. A method according to Claim 23 wherein the propelled material comprises primarily water.

25. A method according to any of Claims 1 to 3 wherein said injury results at least in part from an inimical temperature of the propelled material.

26. A method according to Claim 25 wherein said inimical temperature is such as to cause freezing injury to the tissue.

27. A method according to Claim 26 wherein the propelled material comprises frozen water.

28. A method according to Claim 26 wherein the propelled material comprises carbon dioxide in its solid phase.

29. A method according to Claim 25 wherein said injury results from a combination of inimical temperature and mechanical forces of impact of the propelled material.

30. A method according to Claim 3 wherein the corrosive substance comprises an aqueous solution of an alkali metal hydroxide.

31. A method according to any of Claims 1 to 3 wherein the exogenous chemical substance is monomeric or oligomeric and has a molecular weight not greater than about 8000.

32. A method according to Claim 31 wherein the exogenous chemical substance has a molecular weight not greater than about 2000.

33. A method according to Claim 32 wherein the exogenous chemical substance has a molecular weight not greater than about 1000.

34. A method according to Claim 31 wherein the exogenous chemical substance is selected from the group consisting of pesticides, gametocides, plant growth regulators, mixtures thereof and the like.

35. A method according to Claim 34 wherein an effective rate of the exogenous chemical substance is lower than when applied in the absence of physical injury caused by the propelled material.

36. A method according to Claim 34 wherein rainfastness of the exogenous chemical substance is greater than when applied in the absence of physical injury caused by the propelled material.

37. A method according to Claim 34 wherein symptoms of performance of the exogenous chemical substance are manifested earlier than when applied in the absence of physical injury caused by the propelled material.

38. A method according to Claim 34 wherein the exogenous chemical substance is a pesticide selected from the group consisting of herbicides, fungicides, bactericides, viricides, insecticides, acaricides, miticides, nematicides, molluscicides, mixtures thereof and the like.

39. A method according to Claim 38 wherein the exogenous chemical substance is a herbicide.

40. A method according to Claim 39 wherein the herbicide is of a type that is normally applied pre-emergence but wherein said herbicide causes substantial phytotoxicity when applied post-emergence to the foliage of unwanted vegetation according to said method.

41. A method according to Claim 39 wherein the herbicide is of a type that is normally applied post-emergence to the foliage of unwanted vegetation.

42. A method according to Claim 41 wherein the herbicide is selected from the group consisting of asulam, bentazon, bialaphos, bipyridyls, bromacil, cyclohexenones, dicamba, diphenylethers, fosamine, flupoxam, glufosinate, glyphosate, hydroxybenzonitriles, imidazolinones, isoxaben, norflurazon, phenoxies, phenoxypropionate graminicides, picloram, substituted ureas, sulfonylureas, triazines, herbicidally active derivatives thereof, mixtures thereof and the like.

43. A method according to Claim 42 wherein the herbicide is glyphosate, a salt or ester thereof, or a compound which is converted to glyphosate in plant tissues or which otherwise provides glyphosate ion.

44. A method according to Claim 12 wherein the propelled material comprises, in crystalline or otherwise solid form, glyphosate, a salt or ester thereof, or a compound which is converted to glyphosate in plant tissues or which otherwise provides glyphosate ion.

45. An apparatus for chemically treating non-woody living tissue of a plant which comprises:
(a) means for propelling material which on impact or contact with said tissue causes an effective degree of local physical injury, involving death or significant damage to individual cells in said tissue at one or more sites therein or thereon; and
(b) means for applying an exogenous chemical substance to the plant at or close to at least one of the sites of said injury; wherein means (a) and (b) are one and the same or different and are so arranged that application of the chemical substance is accomplished before, simultaneously with, or after the propelled material impacts or contacts the tissue; with the proviso that if the means for propelling material (a) are blasting means for blasting material, same are so arranged that application of chemical substance is accomplished after the propelled material impacts the tissue.

46. An apparatus according to Claim 45 wherein means (a) comprises a gun, nozzle or vent from which said particles are ejected in a gaseous medium.

47. An apparatus according to Claim 45 wherein means (a) and (b) are not one and the same, the propelled material comprises water, and means (a) comprises a nozzle from which said propelled material is ejected with sufficient energy and power to cause said injury.

48. An apparatus according to Claim 45 which further comprises (c) means for raising or lowering the temperature of a material to an inimical temperature at or prior to the time of its propulsion from the propelling means.

49. An apparatus according to Claim 48 wherein means (a) comprises frozen water or carbon dioxide in its solid phase.

50. An apparatus according to Claim 49 wherein the propelled material comprises carbon dioxide, means (a) comprises a pressurized container of liquid carbon dioxide having an outlet connected directly or indirectly to a device at which pressure is released, resulting in the conversion of the carbon dioxide to its solid phase and the propulsion of said material towards the plant, and means (c) is said device.

51. An apparatus according to Claim 50 wherein said device comprises a mixing chamber having a first inlet connected directly or indirectly to the pressurized container and an outlet connected to a nozzle.

52. An apparatus according to Claim 51 wherein means (a) and (b) are one and the same.

53. An apparatus according to Claim 52 wherein the mixing chamber has a second inlet connected directly or indirectly to a reservoir for holding the exogenous chemical.

54. An apparatus according to Claim 45 wherein means (a) and (b) are not one and the same, and wherein means (b) comprises a hydraulic spraying device.

55. A composition for delivering to a plant an exogenous chemical substance, said composition comprising:
(a) said exogenous chemical substance; and
(b) a solid particulate substance which is except blasting material or an alkaline substance or pressurized liquid carbon dioxide capable of causing respectively by impact or abrasion, corrosion and freezing, sufficient local physical injury, including death or significant damage to individual cells in non-woody living tissue of the plant, to result in enhanced delivery of said exogenous chemical substance to said tissue; with the proviso that any condition of the plant sought to be remedied by said exogenous chemical substance is not one that is exacerbated by local physical injury of the type capable of being caused by said solid particulate substance, alkaline substance of pressurized liquid carbon dioxide.

56. A composition according to Claim 55 which is solid and particulate and is suitable for direct application to the plant without a liquid carrier.

57. A composition according to Claim 55 which is suitable for application to the plant in a liquid carrier.

58. A composition according to Claim 55, further comprising a liquid carrier.

59. A composition according to Claim 58 wherein the liquid carrier comprises water.

60. A composition according to Claim 55 wherein said solid particulate substance is selected from the group consisting of minerals, silicious and calcareous life forms, resins, glasses, microcapsules, coated and uncoated crystals, plant-derived materials, mixtures thereof and the like.

61. A composition according to Claim 60 wherein the solid particulate substance is a mineral selected from the group consisting of clays (for example kaolin), silica, quartz, garnet, alumina, barytes, carborundum, metal oxides, mixtures thereof and the like.

62. A composition according to Claim 61 wherein the solid abrasive particles have a size in the range from about 10 µm to about 5 mm.

63. A composition according to any of Claim 55, wherein the exogenous chemical substance is monomeric or oligomeric and has a molecular weight not greater than about 8000.

64. A composition according to Claim 63 wherein the exogenous chemical substance is a pesticide selected from the group consisting of herbicides, fungicides, bactericides, viricides, insecticides, acaricides, miticides, nematicides, molluscicides, mixtures thereof and the like.

65. A composition according to Claim 64 wherein the exogenous chemical substance is a herbicide.

66. A composition according to Claim 65 wherein the herbicide is of a type that is normally applied pre-emergence.

67. A composition according to Claim 66 wherein the herbicide is of a type that is normally applied post-emergence to the foliage of unwanted vegetation.

68. A composition according to Claim 67 wherein the herbicide is selected from the group consisting of asulam, bentazon, bialaphos, bipyridyls, bromacil, cyclohexenones, dicamba, diphenylethers fomesafen, oxyfluorfen, fosamine, flupoxam, glufosinate, glyphosate, hydroxybenzonitriles, imidazolinones, isoxaben, norflurazon, phenoxies, phenoxypropionate graminicides, picloram, substituted ureas, sulfonylureas, triazines, herbicidally active derivatives thereof, mixtures thereof and the like.

69. A composition according to Claim 68 wherein the herbicide is glyphosate, a salt or ester thereof, or a compound which is converted to glyphosate in plant tissues or which otherwise provides glyphosate ion.

## Patentansprüche

1. Verfahren zum Zuführen einer wirksamen Menge einer exogenen chemischen Substanz an lebendes Nichholzgewebe einer Pflanze, umfassend die gleichzeitig oder in beliebiger Reihenfolge durchgeführten Schritte:
(a) Verursachen eines wirksamen Grades einer lokalen, physischen Verletzung, einschließlich Abtötung oder signifikanter Schädigung, an einzelnen Zellen in dem Gewebe an einer oder mehreren Stellen darin oder darauf mittels eines von einer Vorrichtung vorwärts getriebenen Materials; und
(b) Applizieren der exogenen chemischen Substanz auf die Pflanze an oder nahe mindestens einer der Stellen der Verletzung;
wobei Schritt (b) innerhalb eines wirksamen Zeitraums des Schritts (a) bewekstelligt wird, und wobei die Verletzung per se nicht in einer wesentlichen Entfernung von Biomasse aus der Pflanze resultiert oder irgend einen Zustand der Pflanze, welcher durch die exogene chemische Substanz verbessert werden sollte, verschlimmert, mit der Maßgabe, daß, wenn das von der Vorrichtung vorwärtsgetriebene Material ein Strahlmaterial ist, Schritt (a) dem Schritt (b) vorangeht.

2. Verfahren nach Anspruch 1, wobei Schritt (a) und Schritt (b) gleichzeitig erfolgen und das von der Vorrichtung vorwärtsgetriebene Material eine Zusammensetzung ist, umfassend eine feste, teilchenförmige, abbrasive Substanz und die exogene chemische Substanz.

3. Verfahren nach Anspruch 1, wobei Schritt (a) und Schritt (b) gleichzeitig erfolgen und das von der Vorrichtung vorwärtsgetriebene Material eine Zusammensetzung ist, umfassend eine korrodierend wirkende Substanz und die exogene chemische Substanz.

4. Verfahren nach mindestens einem der Ansprüche 1 bis 3, wobei die Verletzung an einer Vielzahl von Stellen in oder auf dem Gewebe verursacht wird.

5. Verfahren nach mindestens einem der Ansprüche 1 bis 3, wobei die Verletzung per se temporär ist.

6. Verfahren nach mindestens einem der Ansprüche 1 bis 3, wobei die Vorrichtung die Pflanze nicht direkt berührt.

7. Verfahren nach mindestens einem der Ansprüche 1 bis 3, wobei die Vorrichtung die Pflanze berührt, jedoch nicht selbst die Verletzung verursacht.

8. Verfahren nach mindestens einem der Ansprüche 1 bis 3, umfassend weiterhin einen vorausgehenden Schritt des Schneidens, Ausputzens, Mähens oder in sonstiger Weise Entfernens von Biomasse von der Pflanze.

9. Verfahren nach Anspruch 1, wobei Schritt (b) nicht früher als etwa 5 Tage vor Schritt (a) und nicht später als etwa 5 Tage nach Schritt (a) bewerkstelligt wird.

10. Verfahren nach Anspruch 9, wobei Schritt (b) nicht früher als etwa 2 Tage vor (a) bewerkstelligt wird.

11. Verfahren nach Anspruch 10, wobei die Schritte (a) und (b) nahezu gleichzeitig bewerkstelligt werden.

12. Verfahren nach Anspruch 2, wobei die exogene chemische Substanz selbst teilchenförmig und abbrasiv ist und im wesentlichen die feste, teilchenförmige, abbrasive Substanz bildet.

13. Verfahren nach Anspruch 1 oder Anspruch 2, wobei die Teilchen von der Treibvorrichtung in einem gasförmigen Medium ausgestoßen werden.

14. Verfahren nach Anspruch 13, wobei das gasförmige Medium Luft ist.

15. Verfahren nach Anspruch 1 oder Anspruch 2, wobei die Teilchen von der Treibvorrichtung in einem flüssigen Medium ausgestoßen werden.

16. Verfahren nach Anspruch 15, wobei das flüssige Medium primär Wasser umfaßt.

17. Verfahren nach Anspruch 1 oder Anspruch 2, wobei die feste, abbrasive Substanz aus der Gruppe gewählt ist, bestehend aus Mineralien, kieselsäurehaltigen und kalkhaltigen Lebensformen, Harzen, Gläsern, Mikrokapseln, beschichteten und unbeschichteten Kristallen, von Pflanzen abgeleiteten Materialien (beispielsweise gemahlene Walnußschalen), Mischungen hiervon und dergleichen.

18. Verfahren nach Anspruch 17, wobei die feste, abbrasive Substanz ein Mineral ist, gewählt aus der Gruppe, bestehend aus Tonen, Siliciumdioxid, Quarz, Granat, Aluminiumoxid, Bariten, Carborundum, Metalloxiden, Carbonaten, Sulfaten und Phosphaten, Mischungen hiervon und dergleichen.

19. Verfahren nach Anspruch 1 oder Anspruch 2, wobei die feste, abbrasive Substanz mit einer Rate von etwa 0,1 bis etwa 1000 pounds per acre (1121 kg/ha) appliziert wird.

20. Verfahren nach Anspruch 19, wobei die feste, abbrasive Substanz mit einer Rate von etwa 1 bis etwa 600 pounds per acre (1,1 bis etwa 672 kg/ha) appliziert wird.

21. Verfahren nach Anspruch 20, wobei die feste festen abrasiven Teilchen mit einer Rate von etwa 25 bis etwa 300 pounds per acre (28 bis etwa 336 kg/ha) appliziert wird.

22. Verfahren nach Anspruch 1 oder Anspruch 2, wobei die feste, abbrasive Substanz eine Größe im Bereich von etwa 10 µm bis etwa 5 mm aufweisen.

23. Verfahren nach Anspruch 1, wobei das vorwärtsgetriebene Material Fluid ist und von der Vorrichtung mit ausreichender Energie und Kraft ausgestoßen wird, um die Verletzung zu verursachen.

24. Verfahren nach Anspruch 23, wobei das vorwärtsgetriebene Material primär Wasser umfaßt.

25. Verfahren nach mindestens einem der Ansprüche 1 bis 3, wobei die Verletzung zumindest teilweise aus einer schädigenden Temperatur des vorwärtsgetriebenen Materials resultiert.

26. Verfahren nach Anspruch 25, wobei die schädigende Temperatur derart ist, daß sie bei dem Gewebe eine Gefrierverletzung verursacht.

27. Verfahren nach Anspruch 26, wobei das vorwärtsgetriebene Material gefrorenes Wasser umfaßt.

28. Verfahren nach Anspruch 26, wobei das vorwärtsgetriebene Material Kohlenstoffdioxid in dessen Feststoffphase umfaßt.

29. Verfahren nach Anspruch 25, wobei die Verletzung aus einer Kombination einer schädigenden Temperatur und mechanischen Kräften des Einschlages des vorwärtsgetriebenen Materials resultiert.

30. Verfahren nach Anspruch 3, wobei die korrodierend wirkende Substanz eine wäßrige Lösung eines Alkalimetallhydroxids umfaßt.

31. Verfahren nach mindestens einem der Ansprüche 1 bis 3, wobei die exogene chemische Substanz monomer oder oligomer ist und ein Molekulargewicht von nicht mehr als etwa 8000 aufweist.

32. Verfahren nach Anspruch 31, wobei die exogene chemische Substanz ein Molekulargewicht von nicht mehr als etwa 2000 aufweist.

33. Verfahren nach Anspruch 32, wobei die exogene chemische Substanz ein Molekulargewicht von nicht mehr als etwa 1000 aufweist.

34. Verfahren nach Anspruch 31, wobei die exogene chemische Substanz aus der Gruppe gewählt ist, bestehend aus Pestiziden, Gametoziden, Pflanzenwachstumsregulatoren, Mischungen hiervon und dergleichen.

35. Verfahren nach Anspruch 34, wobei eine wirksame Rate der exogenen chemischen Substanz geringer ist als bei Applizierung in Abwesenheit der durch das vorwärtsgetriebene Material verursachten, physischen Verletzung.

36. Verfahren nach Anspruch 34, wobei die Regenbeständigkeit der exogenen chemischen Substanz größer ist als bei Applizierung in Abwesenheit einer durch das vorwärtsgetriebene Material verursachten, physischen Verletzung.

37. Verfahren nach Anspruch 34, wobei Leistungssymptome der exogenen chemischen Susbtanz früher manifestiert werden als bei Applizierung in Abwesenheit einer durch das vorwärtsgetriebene Material verursachten, physischen Verletzung.

38. Verfahren nach Anspruch 34, wobei die exogene chemische Substanz ein Pestizid ist, gewählt aus der Gruppe, bestehend aus Herbiziden, Fungiziden, Bakteriziden, Viriziden, Insektiziden, Akariziden, Mitiziden, Nematiziden, Mollusciziden, Mischungen hiervon und dergleichen.

39. Verfahren nach Anspruch 38, wobei die exogene chemische Substanz ein Herbizid ist.

40. Verfahren nach Anspruch 39, wobei das Herbizid von einem Typ ist, der normalerweise als Vorlaufherbizid appliziert wird, wobei jedoch das Herbizid eine wesentliche Phytotoxizität verursacht, wenn es nach dem Auflaufen auf das Laub unerwünschter Vegetation gemäß dem Verfahren appliziert wird.

41. Verfahren nach Anspruch 39, wobei das Herbizid von einem Typ ist, der normalerweise nachlaufend auf das Laub unerwünschter Vegetation appliziert wird.

42. Vefahren nach Anspruch 41, wobei das Herbizid aus der Gruppe gewählt ist, bestehend aus Asulam, Bentazon, Bialaphos, Bipyridylen, Bromazil, Cyclohexanonen, Dicambe, Diphenylethern, Fosamin, Flupoxam, Glufosinat, Glyphosat, Hydroxybenzonitrilen, Imidazolinen, Isoxaben, Norflurazon, Phenoxiden, Phenxypropionatgraminiziden, Picloram, substituierten Harnstoffen, Sulfonylharnstoffen, Triazinen, herbizidwirksamen Derivaten hiervon, Mischungen hiervon und dergleichen.

43. Verfahren nach Anspruch 42, wobei das Herbizid Glyphosat, ein Salz oder Ester hiervon oder eine Verbindung ist, welche in Pflanzengeweben zu Glyphosat umgewandelt wird, oder welche in sonstiger Weise Glyphosationen ergibt.

44. Verfahren nach Anspruch 12, wobei das vorwärtsgetriebene Material in kristalliner oder in sonstiger fester Form Glyphosat, ein Salz oder einen Ester hiervon oder eine Verbindung umfaßt, welche in Pflanzengeweben zu Glyphosat umgewandelt wird oder welche in sonstiger Weise Glyphosationen ergibt.

45. Vorrichtung zum chemischen Behandeln von lebendem Nichtholzgewebe einer Pflanze, umfassend:
(a) Mittel zum Vorwärtstreiben von Material, das beim Aufprall oder Kontakt mit dem Gewebe einen wirksamen Grad an lokaler, physischer Verletzung, einschließlich Abtötung oder signifikanter Schädigung einzelner Zellen in dem Gewebe an einer oder mehreren Stellen darin oder darauf verursacht; und
(b) Mittel zum Applizieren einer exogenen chemischen Substanz auf die Pflanze an oder nahe mindestens einer der Stellen der Verletzung; wobei die Mittel (a) und (b) ein und dasselbe oder verschieden und so angeordnet sind, daß die Applizierung der chemischen Substanz vor, gleichzeitig mit oder nachdem das vorwärtsgetriebene Material auf dem Gewebe aufprallt oder dieses kontaktiert, bewerkstelligt wird; mit der Maßgabe, daß, wenn die Mittel zum Vorwärtstreiben des Materials (a) Strahlmittel zum Aufstrahlen von Material sind, diese so angeordnet sind, daß die Applizierung der chemischen Substanz bewerkstelligt wird, nachdem das vorwärtsgetriebene Material auf dem Gewebe aufprallt.

46. Vorrichtung nach Anspruch 45, wobei die Mittel (a) eine Sprühpistole, eine Düse oder ein Ventil umfassen, von welchem die Teilchen in einem gasförmigen Medium ausgestoßen werden.

47. Vorrichtung nach Anspruch 45, wobei die Mittel (a) und ( b) nicht ein und dasselbe sind, daß vorwärtsgetriebene Material Wasser umfasst, und die Mittel (a) eine Düse umfassen, von welcher das vorwärtsgetriebene Material mit ausreichend Energie und Kraft ausgestoßen wird, um die Verletzugn zu verursachen.

48. Vorrichtung nach Anspruch 45, umfassend weiterhin (c) Mittel zur Erhöhung oder Absenkung der Temperatur eines Materials auf eine schädigende Temperatur zur oder vor der Zeit seines Vorwärtstreibens aus den Vorwärtstreibmitteln.

49. Vorrichtung nach Anspruch 48, wobei die Mittel (a) gefrorenes Wasser oder Kohlenstoffdioxyd in dessen Feststoffphase umfassen.

50. Vorrichtung nach Anspruch 49, wobei das vorwärtsgetriebene Material Kohlenstoffdioxyd umfasst, das Mittel (a) einen Druckbehälter mit flüssigem Kohlenstoffdioxyd umfasst, mit einem Auslass, der direkt oder indirekt mit einer Einrichtung verbunden ist, bei welcher Druck freigesetzt wird, woraus die Umwandlung des Kohlenstoffdioxyds in seine Feststoffphase und das Vorwärtstreiben des Materials in Richtung der Pflanze resultiert, und wobei das Mittel (c) diese Einrichtung ist.

51. Vorrichtung nach Anspruch 50, wobei die Einrichtung eine Mischkammer mit einem ersten Einlaß, welcher direkt oder indirekt mit dem Druckbehälter verbunden ist, und einen Auslaß, der mit einer Düse verbunden ist, umfasst.

52. Vorrichtung nach Anspruch 51, wobei die Mittel (a) und (b) ein und dasselbe sind.

53. Vorrichtung nach Anspruch 52, wobei die Mischkammer einen zweiten Einlaß aufweist, der direkt oder indirekt mit einem Reservoir zur Aufbewahrung der exogenen Chemikalien verbunden ist.

54. Vorrichtung nach Anspruch 45, wobei die Mittel (a) und (b) nicht ein und dasselbe sind, und wobei Mittel (b) eine hydraulische Sprüheinrichtung umfasst.

55. Zusammensetzung zum Zuführen einer exogenen chemischen Substanz an eine Pflanze, wobei die Zusammensetzung umfasst:
(a) die exogene chemische Substanz; und
(b) eine feste teilchenförmige Substanz, ausgenommen Strahlmaterial oder eine alkalische Substanz oder unter Druck befindliches, flüssiges Kohlendioxyd, welche fähig ist, jeweils durch Aufprall oder Abrieb, Korrosion und Gefrieren, ausreichende, lokale physische Verletzung, einschließlich Abtötung oder signifikante Schädigung einzelner Zellen in lebendem Nichtholzgewebe der Pflanze zu verursachen, um in einer verstärkten Zuführung der exogenen chemischen Substanz zu dem Gewebe zu resultieren; mit der Maßgabe, daß irgendein Zustand der Pflanze, der durch die exogene chemische Substanz verbessert werden sollte, nicht ein solcher ist, der durch lokale physische Verletzung des Typs, wie er durch die feste, teilchenförmige Substanz, alkalische Substanz oder unter Druck befindliches, flüssiges Kohlendioxyd verursacht werden kann, verschlimmert wird.

56. Zusammensetzung nach Anspruch 55, welche fest und teilchenförmig und für die direkte Applizierung auf die Pflanze ohne einen flüssigen Träger geeignet ist.

57. Zusammensetzung nach Anspruch 55, welche zur Applizierung auf die Pflanze in einem flüssigen Träger geeignet ist.

58. Zusammensetzung nach Anspruch 55, umfassend weiterhin einen flüssigen Träger.

59. Zusammensetzung nach Anspruch 58, wobei der flüssige Träger Wasser umfasst.

60. Zusammensetzung nach Anspruch 55, wobei die feste, teilchenförmige Substanz aus der Gruppe gewählt ist, bestehend aus Mineralien, kieselsäurehaltigen und kalkhaltigen Lebensformen, Harzen, Gläsern, Mikrokapseln, beschichteten und unbeschichteten Kristallen, von Pflanzen abgeleiteten Materialien, Mischungen hiervon und dergleichen.

61. Zusammensetzung nach Anspruch 60, wobei die feste, teilchenförmige Substanz ein Mineral ist, gewählt aus der Gruppe, bestehend aus Tonen (beispielsweise Kaolin), Siliciumdioxid, Quartz, Granat, Aluminiumoxid, Baryten, Carborundum, Metaloxiden, Mischungen hiervon und dergleichen.

62. Zusammensetzung nach Anspruch 61, wobei die festen abrasiven Teilchen eine Größe im Bereich von etwa 10µm bis etwa 5mm aufweisen.

63. Zusammensetzung nach Anspruch 55, wobei die exogene chemische Substanz monomer oder oligomer ist und ein Molekulargewicht von nicht mehr als etwa 8000 aufweist.

64. Zusammensetzung nach Anspruch 63, wobei die exogene chemische Substanz ein Pestizit ist, gewählt aus der Gruppe, bestehend aus Herbiziden, Fungiziden, Bakteriziden, Viriziden, Insektiziden, Akariziden, Mitiziden, Nematiziden, Mollusciziden, Mischungen hiervon und dergleichen.

65. Zusammensetzung nach Anspruch 64, wobei die exogene chemische Substanz ein Herbizid ist.

66. Zusammensetzung nach Anspruch 65, wobei das Herbizid, ein Typ ist, der normalerweise als Vorlaufherbizid appliziert wird.

67. Zusammensetzung nach Anspruch 66, wobei das Herbizid von einem Typ ist, der normalerweise nach dem Auflaufen auf das Laub unerwünschter Vegetation appliziert wird.

68. Zusammensetzung nach Anspruch 67, wobei das Herbizid aus der Gruppe gewählt ist, bestehend aus Asulam, Bentazon, Bialaphos, Bipyridylen, Bromazil, Cyclohexanonen, Dicamba, Diphenylethern, Fomesafen, Oxyfluorfen, Fosamin, Flupoxam, Glufosinat, Glyphosat, Hydroxybenzonitrilen, Imidazolinonen, Isoxaben, Norflurazon, Phenoxiden, Phenoxypropionat graminiziden, Picloram, substitutierten Harnstoffen, Sulfonylharnstoffen, Triazinen, herbizidwirksamen Derivaten hiervon, Mischungen hievon und dergleichen.

69. Zusammensetzung nach Anspruch 68, wobei das Herbizid Glyphosat,ein Salz oder Ester hiervon oder eine Verbindung ist, welche in Pflanzengeweben zu Glyphosat umgewandelt wird oder welche in sonstiger Weise Glyphosationen ergibt.

## Revendications

1. Procédé pour amener une quantité efficace d'une substance chimique exogène à un tissu vivant non ligneux d'une plante comprenant les étapes consistant à :
(a) provoquer un degré efficace de meurtrissures physiques locales, impliquant la mort ou une détérioration significative de cellules individuelles dudit tissu en un ou plusieurs sites dans ce tissu ou sur celui-ci, au moyen de matière projetée depuis un dispositif ; et à
(b) appliquer ladite substance chimique exogène sur la plante sur ou près d'au moins un des sites desdites meurtrissures ;
dans lequel l'étape (b) est effectuée dans un temps approprié de l'étape (a) et dans lequel lesdites meurtrissures ne provoquent pas par elles-mêmes une perte substantielle de biomasse de la plante ni ne dégradent l'état de la plante que ladite substance chimique exogène doit corriger.

2. Procédé selon la revendication 1, dans lequel l'étape (a) et l'étape (b) sont simultanées et la matière projetée depuis un dispositif est une composition comprenant une substance abrasive particulaire solide et ladite substance chimique exogène.

3. Procédé selon la revendication 1, dans lequel ladite étape (a) et ladite étape (b) sont simultanées et la matière projetée du dispositif est une composition comprenant une substance corrosive et ladite substance chimique exogène.

4. Procédé selon l'une quelconque des revendications 1 à 3, dans lequel lesdites meurtrissures sont provoquées à une pluralité de sites, dans ou sur ledit tissu.

5. Procédé selon l'une quelconque des revendications 1 à 3, dans lequel lesdites meurtrissures sont en soi temporaires.

6. Procédé selon l'une quelconque des revendications 1 à 3, dans lequel ledit dispositif ne vient pas directement en contact avec la plante.

7. Procédé selon l'une quelconque des revendications 1 à 3, dans lequel ledit dispositif vient en contact avec la plante mais ne provoque pas lui-même lesdites meurtrissures.

8. Procédé selon l'une quelconque des revendications 1 à 3, comprenant en outre une étape préalable consistant à couper, tailler, tondre ou enlever par un autre moyen de la biomasse de la plante.

9. Procédé selon la revendication 1, dans lequel l'étape (b) ne s'effectue pas plus de 5 jours environ avant l'étape (a) et pas plus de 5 jours environ après l'étape (a).

10. Procédé selon la revendication 9, dans lequel l'étape (b) ne s'effectue pas plus de 2 jours environ avant (a).

11. Procédé selon la revendication 10, dans lequel les étapes (a) et (b) se font presque simultanément.

12. Procédé selon la revendication 2, dans lequel la substance chimique exogène est elle-même particulaire et abrasive et constitue essentiellement ladite substance abrasive particulaire solide.

13. Procédé selon la revendication 1 ou la revendication 2, dans lequel les particules sont éjectées du dispositif de projection dans un milieu gazeux.

14. Procédé selon la revendication 13, dans lequel le milieu gazeux est l'air.

15. Procédé selon la revendication 1 ou la revendication 2, dans lequel les particules sont éjectées dudit dispositif de projection dans un milieu liquide.

16. Procédé selon la revendication 15, dans lequel le milieu liquide comprend essentiellement de l'eau.

17. Procédé selon la revendication 1 ou la revendication 2, dans lequel ladite substance abrasive solide est choisie dans un groupe constitué par des minerais, des produits siliciques ou calcaires provenant de formes vivantes, des résines, des verres, des microcapsules, des cristaux portant ou non un revêtement, des matières dérivées de plantes (par exemples des coquilles de noix broyées), leurs mélanges et similaire.

18. Procédé selon la revendication 17, dans lequel la substance abrasive solide est une substance minérale choisie dans le groupe constitué par des argiles, des silices, des quartz, des grenats, des alumines, des barytes, des Carborundums, des oxydes métalliques, des carbonates, des sulfates et des phosphates, leurs mélanges et similaire.

19. Procédé selon la revendication 1 ou la revendication 2, dans lequel la substance abrasive solide est appliquée en une quantité allant d'environ 0,1 à environ 1000 livres par acre (1121 kg / ha).

20. Procédé selon la revendication 19, dans lequel la substance abrasive solide est appliquée en une quantité allant d'environ 1 à environ 600 livres par acre (1,1 à environ 672 kg / ha).

21. Procédé selon la revendication 20, dans lequel la substance abrasive solide est appliquée en une quantité allant d'environ 25 à environ 300 livres par acre (28 à environ 336 kg / ha).

22. Procédé selon la revendication 1 ou la revendication 2, dans lequel les particules abrasives solides ont une taille dans la plage allant d'environ 10 µm à environ 5 mm.

23. Procédé selon la revendication 1, dans lequel la matière projetée est un fluide et celui-ci est éjecté du dispositif avec une énergie et une puissance suffisantes pour provoquer lesdites meurtrissures.

24. Procédé selon la revendication 23, dans lequel la matière projetée comprend, de manière prépondérante, de l'eau.

25. Procédé selon l'une quelconque des revendications 1 à 3 dans lequel lesdites meurtrissures proviennent au moins en partie d'une température agressive de la matière projetée.

26. Procédé selon la revendication 25, dans lequel ladite température agressive est de nature à provoquer des meurtrissures au tissu par congélation.

27. Procédé selon la revendication 26, dans lequel la matière projetée comprend de l'eau congelée.

28. Procédé selon la revendication 26, dans lequel la matière projetée comprend de l'anhydride carbonique en phase solide.

29. Procédé selon la revendication 25, dans lequel lesdites meurtrissures résultent de la combinaison d'une température agressive et de forces mécaniques d'impact de la matière projetée.

30. Procédé selon la revendication 3, dans lequel la substance corrosive comprend une solution aqueuse d'un hydroxyde de métal alcalin.

31. Procédé selon l'une quelconque des revendications 1 à 3, dans lequel la substance chimique exogène est monomère ou oligomère et a un poids moléculaire ne dépassant pas environ 8000.

32. Procédé selon la revendication 31, dans lequel la substance chimique exogène a un poids moléculaire ne dépassant pas environ 2000.

33. Procédé selon la revendication 32, dans lequel la substance chimique exogène a un poids moléculaire ne dépassant pas environ 1000.

34. Procédé selon la revendication 31, dans lequel la substance chimique exogène est choisie dans le groupe constitué par les pesticides, les gamétocides, les régulateurs de la croissance de plantes, leurs mélanges et similaire.

35. Procédé selon la revendication 34, dans lequel la quantité efficace de la substance chimique exogène est plus basse que quand l'application se fait en absence de meurtrissures physiques provoquées par la matière projetée.

36. Procédé selon la revendication 34, dans lequel la résistance à la pluie de la substance chimique exogène est supérieure à celle trouvée en absence de meurtrissures physiques provoquées par la matière projetée.

37. Procédé selon la revendication 34, dans lequel les symptômes de l'action de la substance chimique exogène se manifestent plus tôt que quand l'application se fait en absence des meurtrissures physiques provoquées par la matière projetée.

38. Procédé selon la revendication 34, dans lequel la substance chimique exogène est un pesticide choisi dans le groupe constitué par les herbicides, les fongicides, les bactéricides, les viricides, les insecticides, les acaricides, les nématocides, les molluscicides, leurs mélanges et similaire.

39. Procédé selon la revendication 38, dans lequel la substance chimique exogène est un herbicide.

40. Procédé selon la revendication 39, dans lequel l'herbicide est d'un type qui est normalement appliqué avant la sortie de terre des plantes, mais dans lequel le ledit herbicide provoque une phytotoxicité substantielle quand il est appliqué selon ledit procédé au feuillage de végétations indésirables, après la sortie de terre des plantes.

41. Procédé selon la revendication 39, dans lequel l'herbicide est d'un type qui est normalement appliqué après la sortie de terre des plantes, au feuillage de végétations indésirables.

42. Procédé selon la revendication 41, dans lequel l'herbicide est choisi dans le groupe constitué par l'asulam, le bentazon, le bialaphos, les composés bipyridyle, le bromacil, les cyclohexénones, le dicamba, les diphényléthers, la fosamine, le flupoxam, le glufosinate, le glyphosate, les hydroxybenzonitriles, les imidazolinones, l'isoxaben, le norflurazon, les composés phenoxy, les graminicides de type phénoxypropionate, le picloram, les urées substituées, les sulfonylurées, les triazines et les dérivés de ces composés ayant une activité herbicide, leurs mélanges et similaire.

43. Procédé selon la revendication 42, dans lequel l'herbicide est le glyphosate, un sel ou un ester de celui-ci ou un composé qui est converti en glyphosate dans le tissu de plantes ou qui produit, par tout autre processus, un ion glyphosate.

44. Procédé selon la revendication 12, dans lequel dans lequel la matière projetée comprend, sous une forme cristalline ou autre, le glyphosate, un sel ou un ester de celui-ci ou un composé qui est converti en glyphosate dans le tissu de plantes ou qui produit, par tout autre processus, un ion glyphosate.

45. Appareil pour traiter chimiquement un tissu vivant non ligneux d'une plante, qui comprend :
(a) un moyen pour projeter une matière qui, à l'impact ou au contact avec ledit tissu, provoque un degré efficace de meurtrissures physiques locales, entraînant la mort ou une détérioration significative de cellules individuelles dans ledit tissu en un ou plusieurs sites dans le tissu ou sur celui-ci ; et
(b) un moyen pour appliquer une substance chimique exogène à la plante sur ou près d'au moins un des sites de ladite meurtrissure; dans lequel les moyens (a) et (b) constituent la même et unique unité ou sont différents et agencés de manière à ce que l'application de la substance chimique soit effectuée avant, en même temps ou après que la matière projetée vient frapper ou vient en contact avec le tissu ; avec comme condition toutefois, que, si le moyen pour projeter la matière (a) est un moyen de sablage pour une matière de sablage, il est agencé de manière à ce que l'application de la substance chimique se fasse après que la matière projetée vient frapper le tissu.

46. Appareil selon la revendication 45, dans lequel le moyen (a) comprend un pistolet, une buse ou un évent depuis lequel lesdites particules sont projetées dans un milieu gazeux.

47. Appareil selon la revendication 45, dans lequel le moyen (a) et le moyen (b) ne forment pas une même et unique unité, la matière projetée comprend de l'eau et le moyen (a) comprend une buse depuis laquelle ladite matière projetée est éjectée avec une énergie et une puissance suffisantes pour provoquer lesdites meurtrissures.

48. Appareil selon la revendication 45, qui comprend en outre (c) un moyen pour augmenter ou abaisser la température d'une matière pour l'amener à une température agressive au moment de la projection hors du moyen de projection, ou avant.

49. Appareil selon la revendication 48, dans lequel le moyen (a) comprend de l'eau congelée ou de l'anhydride carbonique sous une forme solide.

50. Appareil selon la revendication 49, dans lequel la matière projetée comprend de l'anhydride carbonique, le moyen (a) comprend un récipient sous pression d'anhydride carbonique liquide ayant une sortie reliée directement ou indirectement à un dispositif dans lequel la pression est libérée, ce qui produit le passage de l'anhydride carbonique en phase solide et la projection de ladite matière vers la plante et le moyen (c) est ledit dispositif.

51. Appareil selon la revendication 50, dans lequel ledit appareil comprend une chambre de mélange ayant une première entrée reliée directement ou indirectement au récipient sous pression et une sortie reliée à une buse.

52. Appareil selon la revendication 51, dans lequel le moyen (a) et le moyen (b) sont un même et unique dispositif.

53. Appareil selon la revendication 52, dans lequel la chambre de mélange a une seconde entrée reliée directement ou indirectement à un réservoir pour recevoir le composé chimique exogène.

54. Appareil selon la revendication 45, dans lequel le moyen (a) et le moyen (b) ne sont pas un même et unique dispositif et dans lequel le moyen (b) comprend un dispositif de pulvérisation hydraulique.

55. Composition pour amener à une plante une substance chimique exogène, ladite composition comprenant :
(a) ladite substance chimique exogène ; et
(b) une substance particulaire solide, autre qu'une matière de sablage, une substance alcaline ou de l'anhydride carbonique liquide sous pression, qui est capable de provoquer par impact, par abrasion, par corrosion ou par congélation, des meurtrissures physiques locales suffisantes et, en particulier, de provoquer la mort des cellules individuelles du tissu vivant non ligneux de la plante ou de leur infliger des dommages significatifs, ce qui a pour résultat d'augmenter l'administration de ladite substance chimique exogène audit tissu ; à condition que l'état de la plante auquel on cherche à porter remède par ladite substance chimique exogène ne soit pas aggravé par des meurtrissures physiques locales du type de celles causées par ladite substance particulaire solide, ladite substance alcaline ou ledit anhydride carbonique liquide sous pression.

56. Composition selon la revendication 55, qui est solide et particulaire et qui convient à une application directe à la plante sans un vecteur liquide.

57. Composition selon la revendication 55, qui convient pour une application à la plante dans un vecteur liquide.

58. Composition selon la revendication 55, comprenant en outre un vecteur liquide.

59. Composition suivant la revendication 58, dans laquelle le vecteur liquide comprend de l'eau.

60. Composition selon la revendication 55, dans laquelle ladite substance particulaire solide est choisie dans le groupe constitué des minerais, des produits siliciques ou calcaires provenant de formes vivantes, des résines, des verres, des microcapsules, des cristaux portant ou non un revêtement, des matière dérivées de plantes, leurs mélanges et similaire.

61. Composition selon la revendication 60, dans laquelle la substance particulaire solide est un minerai choisi dans le groupe constitué par des argiles (par exemple le kaolin), des silices, des quartz, des grenats, des alumines, des barytes, des Carborundums, des oxydes métalliques, leurs mélanges et similaire.

62. Composition selon la revendication 61, dans laquelle les particules abrasives solides ont une taille dans la plage d'environ 10 µm à environ 5 mm.

63. Composition selon la revendication 55, dans laquelle la substance chimique exogène est un monomère ou un oligomère ayant un poids moléculaire ne dépassant pas 8000 environ.

64. Composition selon la revendication 63, dans laquelle la substance chimique exogène est un pesticide choisi dans le groupe constitué par les herbicides, les fongicides, les bactéricides, les viricides, les insecticides, les acaricides, les nématocides, les molluscicides, leurs mélanges et similaire.

65. Composition selon la revendication 64, dans laquelle la substance chimique exogène est un herbicide.

66. Composition selon la revendication 65, dans laquelle l'herbicide est d'un type qui est normalement appliqué avant la sortie des plantes de terre.

67. Composition selon la revendication 66, dans laquelle l'herbicide est d'un type qui est normalement appliqué après la sortie des plantes de terre, sur le feuillage de végétations indésirables.

68. Composition selon la revendication 67, dans laquelle l'herbicide est choisi dans le groupe constitué par l'asulam, le bentazon, le bialaphos, les composés bipyridyle, le bromacil, les cyclohexénones, le dicamba, les diphényléthers de type fomesafen et oxyfluorfen, la fosamine, le flupoxam, le glufosinate, le glyphosate, les hydroxybenzonitriles, les imidazolinones, l'isoxaben, le norflurazon, les composés phenoxy, les graminicides de type phénoxypropionate, le picloram, les urées substituées, les sulfonylurées, les triazines et les dérivés de ces composés ayant une activité herbicide, leurs mélanges et similaire.

69. Composition selon la revendication 68, dans laquelle l'herbicide est le glyphosate, un sel ou un ester de celui-ci ou un composé qui est converti en glyphosate dans le tissu de plantes ou qui produit, par tout autre processus, un ion glyphosate.
